# EUROPÄISCHE PATENTSCHRIFT

(11) **EP 2 067 222 B1**
(45) Veröffentlichungstag und Bekanntmachung des Hinweises auf die Patenterteilung: **19.03.2014**
(21) Anmeldenummer: 06805338.8
(22) Anmeldetag: 25.09.2006
(51) Int. Cl.: H02B 1/21

(54) **SAMMELSCHIENENKONTAKTIERUNG MIT SCHIENENDICKENAUSGLEICH**
BUSBAR CONTACT-MAKING WITH BAR THICKNESS COMPENSTAION
MISE EN CONTACT DE BARRES COLLECTRICES AVEC COMPENSATION DE L'ÉPAISSEUR DES BARRES

(43) Veröffentlichungstag der Anmeldung: 10.06.2009
(73) Patentinhaber: Siemens Aktiengesellschaft, 80333 München (DE)
(72) Erfinder: BLAIMER, Gerhard, 92245 Kümmersbruck (DE); BRUSCHKE, Rolf-Eberhard, 01239 Dresden (DE); HUSSMANN, Jörg, 92318 Neumarkt (DE); MASCHKE, Norbert, 01307 Dresden (DE); PROTZ, Robert, 01237 Dresden (DE); SCUDLO, Steffen, 91056 Erlangen (DE); STANG, Alfred, 92224 Amberg (DE)
(86) Internationale Anmeldenummer: PCT/DE2006/001690
(87) Internationale Veröffentlichungsnummer: WO 2008/037229

(56) Entgegenhaltungen:
- EP-A1- 1 587 168
- WO-A-2004/088808
- DE-U1- 29 806 196

## Beschreibung

Die Erfindung betrifft eine Sammelschienenkontaktierung mit Schienendickenausgleich zur Befestigung beziehungsweise Aufhängung und elektrischen Kontaktierung eines elektrischen Gerätes auf einer Stromschiene.

Gegenstand der Erfindung ist zum einen ein Distanzstück zur Anpassung eines Abstandes in einem Federhaken an die Dicke einer Stromschiene, welches an einem Federhaken um eine Achse drehbar anbringbar ist und zur Anlage an einer Stromschiene wenigstens einen konvex gestalteten Bereich aufweist. Ein weiterer Gegenstand der Erfindung ist ein Federhaken zur Aufhängung eines elektrischen Gerätes auf einer Stromschiene mit wenigstens einem geräteseitigen Hakenschenkel, der am Gerät befestigt ist und wenigstens einem im Wesentlichen parallel zum geräteseitigen Hakenschenkel ausgebildeten klemmenden Hakenschenkel zur Aufnahme einer Klemmkraft und wenigstens einem die beiden Hakenschenkel verbindenden Verbindungssteg und einer Einrichtung zur drehbaren Anordnung eines Distanzstückes.

Zur Befestigung sowie zur elektrischen Kontaktierung von elektrischen Geräten auf Stromschienen werden diese standardmäßig mittels Haltehaken auf die Stromschienen aufgesteckt beziehungsweise aufgehangen. Für die Aufhängung sind zu diesem Zweck Haltehaken am Gerät befestigt beziehungsweise es sind am Gerät integriert Haltehaken vorgesehen. Die lichte Weite eines Haltehakens entspricht dabei üblicherweise der Dicke der Stromschiene, auf die der Haken aufgeschoben wird. Die Gewichtskraft des elektrischen Gerätes sowie ein durch die Gewichtskraft des elektrischen Gerätes erzeugtes Biegemoment werden somit über den Haltehaken in die Stromschiene eingeleitet. Im Haltehaken selbst oder in dessen unmittelbarer Nähe sind des Weiteren federnde Elemente angeordnet, die beim Aufschieben des Haltehakens auf die Stromschiene derart verformt werden, dass deren Federkraft gegen die Stromschiene gerichtet ist. Das bedeutet, dass beim Aufschieben des Haltehakens auf die Stromschiene eine durch Federkraft erzeugte Reibkraft überwunden werden muss. Je höher die durch die Feder aufgebrachte Kraft ist, um so höher ist die zu überwindende Reibkraft und um so höher ist die Beanspruchung der Stromschiene sowie der an ihr reibenden Bauteile und ebenfalls die Belastung für den das elektrische Gerät aufhängenden Monteur.

Es gibt unterschiedliche Stromschienendicken, die üblicherweise genormt sind. Während der Lebensdauer eines elektrischen Gerätes kann der Fall auftreten, dass es zunächst mit einer Stromschiene mit einer geringeren Dicke, zum Beispiel 5 mm, und in einer späteren Verwendung mit einer Stromschiene mit größerer Dicke, zum Beispiel 10 mm, verbunden werden soll. Bei einer Ausstattung des elektrischen Gerätes mit einem Haltehaken, der eine lichte Weite von 5 mm aufweist, kann dieser Haltehaken nicht mehr auf einer 10 mm dicken Stromschiene befestigt werden. Im umgekehrten Fall, in dem die lichte Weite des Haltehakens 10 mm beträgt, kann dieser zwar auf eine 5 mm dicke Stromschiene aufgesetzt werden, ist dort aber aufgrund des großen Abstandes zu den jeweiligen Stromschienenseitenflächen nicht mehr mittels eines herkömmlichen Federdruckelementes festklemmbar.

Aus dem Dokument EP1587168A1 ist bereits ein Federhaken bekannt, mit dem sich ein Installationsschaltgerät, beispielsweise ein Sicherungshauptschalter, auf Stromschienen eines elektrischen Verteilers aufhängen lässt. Dabei hintergreift ein Rasthaken die Stromschiene auf einer Seite, während auf der gegenüberliegenden Seite ein zweiarmiger Sperrhebel mit seinem Haltearm die Stromschiene gegen den Rasthaken drückt. Der Sperrhebel ist verschwenkbar gelagert, wobei der dem Haltearm gegenüberliegende Zugarm von der Federkraft einer Zugfeder entsprechend beaufschlagt wird. Die Schwenkachse verläuft längs der Stromschiene. Eine Anpassung an die Dicke der Stromschiene wird durch eine abgestufte Ausführung des Rasthakens ermöglicht.

Weiter ist aus dem Dokument W02004/088808A1 ein hakenförmiger Adapter bekannt, bei dem ein elektrisch leitendes Zwischenstück als Dickenausgleich vorgesehen ist, das von einem u-förmigen Halteteil gehalten wird. Zur Vereinfachung der Montage ist das Zwischenstück um eine längs der Stromschiene verlaufende Drehachse an dem Halteteil verschwenkbar.

Ferner ist aus dem Dokument DE 198 36 383 C1 eine Kontaktiereinrichtung für Sammelschienenadapter bekannt. Diese Kontaktiereinrichtung weist ein hakenförmiges Klemmteil zur Aufhängung eines elektrischen Gerätes auf einer Stromschiene auf. Mit dem Klemmteil ist ein Schwenkbügel drehbar verbunden. Das Klemmteil ist durch einen Schlitz eines als Sammelschienenkontaktierung ausgeführten federnden Elementes geführt. Bei Aufhängen des elektrischen Gerätes wird der Klemmbügel auf die Stromschiene derart aufgesetzt, dass ein Schenkel des hakenförmig ausgestalteten Klemmbügels an einer Seite der Stromschiene anliegt und an der anderen Seite der Stromschiene das federnde Element anliegt. Über das Klemmteil sowie über das federnde Element kann ein elektrischer Kontakt zwischen Stromschiene und elektrischem Gerät hergestellt werden. Die geschilderte Ausführung betrifft die Aufhängung des elektrischen Gerätes auf einer dickeren Stromschiene, zum Beispiel mit einer Dicke von 10 mm. Bei Aufhängung des elektrischen Gerätes auf einer Stromschiene mit geringerer Dicke, wie zum Beispiel einer Stromschiene mit einer Dicke von 5 mm, wird der drehbar am Klemmteil befestigte Schwenkbügel in eine Position geschwenkt, in der ein konvex ausgestalteter Bereich an einem seiner Schenkel dem federnden Element gegenüberliegt. Der Abstand zwischen dem konvexen Bereich des Schwenkbügels und dem federnden Element beträgt etwas weniger als die Dicke der Stromschiene. Bei Aufhängung des derart adaptierten Haltehakens des elektrischen Gerätes auf die Stromschiene liegt der konvexe Bereich des Schwenkbügels an der einen Seite der Stromschiene und das federnde Element an der anderen Seite der Stromschiene an. Der Stromfluss von der Stromschiene zum elektrischen Gerät kann somit über das federnde Element erfolgen. Um eine zusätzliche Momentenbelastung und damit eine zu befürchtende Verkeilung der Aufhängung auf der Stromschiene zu vermeiden, muss das die Andruckkraft bewirkende federnde Element in unmittelbarer Nähe zum Aufhängungshaken positioniert sein. Diese Notwendigkeit der Anordnung mehrerer Bauteile an einer Position an der Stromschiene bewirkt eine erhöhte Kompliziertheit der dort anzuordnenden Bauteile und damit erhöhte Fertigungskosten dieser Bauteile. Des Weiteren ist ein Nachlassen der Federkraft des federnden Elementes bei Erwärmung aufgrund des Stromflusses zu befürchten.

Zur Adaption der Aufhängung eines elektrischen Gerätes auf einer Stromschiene sind des Weiteren die in den Dokumenten DE 40 38 336 C2 beschriebene Erfindung und die im Dokument 297 21 445 U1 beschriebene Erfindung bekannt. Das Dokument DE 40 38 336 C2 lehrt eine Adaption an unterschiedlich dicke Stromschienen dahin gehend, dass ein unterschiedlich lange Absätze aufweisendes Verschiebeteil entsprechend der Dicke und der Breite einer Stromschiene an diese angepasst werden kann. Zu diesem Zweck weist das Verschiebeteil Langlöcher beziehungsweise Nuten zur Befestigung in den jeweils gewünschten Positionen auf. Die Einstellung des Verschiebeteils in unterschiedlichen Positionen bedarf allerdings eines erhöhten Montageaufwandes.

Im Dokument DE 297 21 445 U1 können spezielle Kontaktfüße an Halteelemente aufgesteckt beziehungsweise eingeschoben werden. Der Nachteil dieser Ausführungsform besteht darin, dass die Kontaktfüße vor der Montage an den Halteelementen als einzelne Bauteile vorliegen. Das bedeutet, dass sie zum Beispiel nach Entfernen von den Halteelementen und bei geplanter Wiederverwendung gesondert aufbewahrt werden müssen.

Die Aufgabe der Erfindung ist es daher, eine kostengünstige Befestigungseinrichtung zur Befestigung eines elektrischen Gerätes an einer Stromschiene zur Verfügung zu stellen, die bei minimaler Bauteilbeanspruchung bei der Montage und Wiederverwendbarkeit und Unverlierbarkeit einzelner Bauelemente in einfacher Weise eine flexible Anpassung der Aufhängung des Gerätes an unterschiedliche Stromschienendicken ermöglicht.

Als ein erster Aspekt der Erfindung wird ein Distanzstück zur Anpassung eines Abstandes in einem Federhaken an die Dicke einer Stromschiene zur Verfügung gestellt, welches am Federhaken um eine Achse drehbar anbringbar ist und zur Anlage an einer Stromschiene wenigstens einen konvex gestalteten Bereich aufweist, wobei sich die Drehachse auf der Seite der Öffnung des konvexen Bereiches hinter diesem konvexen Bereich befindet. Der Abstand des Federhakens bezeichnet dabei die lichte Weite zwischen den Schenkeln des Federhakens. Die Drehachse ist dabei eine mathematische Achse, die zum Beispiel durch eine Welle, durch eine mechanische Achse oder auch durch eine die Drehbewegung definierende Kurvenbahn erzeugt wird. Die Drehachse beziehungsweise der Punkt, um den sich das Distanzstück dreht, kann dabei innerhalb oder auch außerhalb der konvex gestalteten Fläche liegen. Bei einer Ausführung des konvexen Bereiches als ein Kreissegment kann die Drehachse zum Beispiel im Zentrum des Kreissegmentes liegen. Alternativ zur Ausgestaltung als Kreissegment kann der Rand des konvexen Bereichs allerdings auch zum Beispiel einen parabolischen oder exponentiellen Verlauf aufweisen. Der Bereich der Öffnung des konvexen Bereiches bezeichnet die Seite des konvexen Bereiches, zu der sich die den konvexen Bereich begrenzende geometrische Kurve öffnet. Die Anordnung der Drehachse auf der Seite der Öffnung des konvexen Bereiches hinter diesem konvexen Bereich bedeutet demnach, dass sich die Drehachse hinter der den konvexen Bereich begrenzenden Anlagekante befindet.

Bei einer Definition der Breite des konvexen Bereiches als den Abstand des einen Endes der konkaven Anlagekante zu ihrem anderen Ende ist die Drehachse derart am Distanzstück positioniert, dass sie sich nicht außerhalb des definierten Breitenmaßes befindet.

Dadurch, dass sich die Drehachse auf der Seite der Öffnung des konvexen Bereiches hinter diesem konvexen Bereich befindet, ergibt sich eine kompakte Geometrie des Distanzstücks. Durch die drehbare Befestigungsmöglichkeit an einem Federhaken ist das Distanzstück unverlierbar an diesem angeordnet. Bei einem Herausschwenken des Distanzstücks aus dem Federhaken ergibt sich eine Distanzverringerung zwischen Distanzstück und einer Anlagekante am Federhaken beziehungsweise einem federnden Sammelschienenkontaktstück, welches am Federhaken angeordnet ist. Dieser verringerte Abstand bewirkt einen festen Sitz des Federhakens mit herausgeschwenktem Distanzstück auf einer entsprechend schmal gestalteten Stromschiene. Das im Federhaken gehaltene Sammelschienenkontaktstück drückt auf die eine Seite der Stromschiene, wobei sich an der gegenüberliegenden Seite der Stromschiene das im Federhaken angeordnete Distanzstück an die Stromschiene anlegt.

Vorzugsweise ist das Distanzstück derart ausgestaltet, dass es sich bei Kraftbeaufschlagung am Federhaken abstützen kann. Das heißt, dass am Distanzstück zumindest eine Einrichtung vorhanden ist, welche beim Aufschieben des Federhakens auf die Stromschiene erzeugten Reibkräfte sowie die von einer Klemmfeder erzeugten Federkräfte in den Federhaken überträgt. Zu diesem Zweck sind im erfindungsgemäßen Distanzstück Absätze vorgesehen, die sich in bestimmten Winkelpositionen, die der Stellung des Distanzstücks bei Aufhängung auf eine Stromschiene bestimmter Dicke entsprechen, an am Federhaken vorgesehenen Formelementen anliegen.

Zur Realisierung der Drehachse für das Distanzstück ist vorgesehen, dass dieses an seinem Drehpunkt eine Öffnung zur Hindurchführung einer mechanischen Achse aufweist. Bei einer Anordnung der mechanischen Achse in einem Federhaken ist die Achse fest in diesem fixiert und das Distanzstück kann um diese Achse im Federhaken rotieren. Alternativ dazu kann vorgesehen sein, dass das Distanzstück eine Welle umfasst. In besonderer Ausführungsform kann vorgesehen sein, dass das Distanzstück statt der Welle lediglich eine Befestigungseinrichtung zur Befestigung einer Welle umfasst. In den beiden letztgenannten Ausführungsformen ist das Distanzstück fest mit einer Welle verbunden beziehungsweise fest mit einer Welle verbindbar. Diese Welle ist in einem Federhaken drehbar gelagert, so dass das Distanzstück über diese Welle im Federhaken drehbar aufgenommen ist.

In einer weiteren alternativen Ausgestaltung zur Anordnung einer Drehachse beziehungsweise Drehwelle kann das Distanzstück einen kreissegmentförmigen konkaven Bereich aufweisen, der bei Anlage an einen entsprechend kreissegmentförmig gestalteten konvexen Bereich eines Gegenstücks (am Federhaken) die Drehbewegungsbahn definiert. In dieser Ausführungsform gleiten zwei kreisbahnförmige Kurven derart aufeinander, dass das Distanzstück eine Drehbewegung auf einer Kreisbahn um eine Drehachse ausführt.

In einer bevorzugten Ausführungsform ist des Weiteren vorgesehen, dass der konvex geformte Bereich des Distanzstücks ein Kreissegment ist. In vorteilhafter Weise befindet sich in dieser Ausführungsform die Drehachse des Distanzstücks im Zentrum des Kreissegmentes. Es kann daneben alternativ allerdings auch vorgesehen sein, dass die Drehachse sich außerhalb des Zentrums des Kreissegmentes befindet, so kann sie zum Beispiel dichter als das Kreiszentrum am Kreissegmentrand angeordnet sein oder auch einen weiteren Abstand als das Kreiszentrum vom Kreissegmentrand haben.

In einer alternativen Ausführungsform zur Kreissegmentform kann das Distanzstück derart ausgestaltet sein, dass der konvex geformte Bereich zumindest Teil einer Exzenterscheibe ist. Somit ergibt sich bei Drehung des Distanzstücks in einem Federhaken in Abhängigkeit zur Winkelposition ein ständig ändernder minimaler Abstand zwischen der Anlagekante des Distanzstückes und dem gegenüberliegenden Federhakenschenkel und damit eine sich ständig ändernde lichte Weite des Federhakens. Vorzugsweise ist die Form der Exzenterscheibe derart ausgestaltet, dass sich bei Hereinklappen des Distanzstücks in den Bereich zwischen die Schenkels des Federhakens eine beständige Abstandsverringerung zwischen Distanzstück und gegenüberliegenden Federhaken beziehungsweise federndem Sammelschienenkontaktstück im Federhaken ergibt.

In einer bevorzugten Ausgestaltung ist an einem Ende der konvexen Anlagekante des Distanzstücks ein erster Absatz angebracht, der sich beim Aufsetzen eines Federhakens, in dem ein erfindungsgemäßes Distanzstück montiert ist, an eine Kante zwischen einer Kontaktseite der Stromschiene und der Oberseite der Stromschiene anlegt. Beim Aufschieben des Federhakens auf die Stromschiene drückt somit dieser Absatz auf die Oberseite der Stromschiene und bewirkt eine Verdrehung des Distanzstücks. Damit entsteht eine Rollbewegung des Distanzstücks auf der seitlichen Kontaktierungsfläche der Stromschiene. Der Aufschiebevorgang ist dann beendet, wenn die Stromschiene an einem Begrenzungselement am Federhaken anliegt oder auch, wenn das Distanzstück in einer Endrastposition eingerastet ist, die eine weitere Drehbewegung des Distanzstücks verhindert. Durch die Rollbewegung des Distanzstücks auf einer Kontaktierungsfläche der Stromschiene werden somit auf dieser Fläche keine Reibkräfte beim Aufschieben des Federhakens auf die Stromschiene erzeugt. Das bedeutet, dass beim Aufschieben des Federhakens mit in ihm montierten drehbaren Distanzstück alleine nur Reibkräfte an einem Sammelschienenkontaktstück beziehungsweise an einer Anlagekante am Federhaken auftreten. Die Verminderung der Reibkräfte führt zu einer Entlastung des Montagepersonals sowie zu einer geringeren Belastung der an die Stromschiene anzuschließenden Bauteile.

In einer weiteren vorteilhaften Ausgestaltung weist das Distanzstück eine Mehrzahl von konvex gestalteten Anlagekanten auf, die im Wesentlichen eine konvexe Gesamt-Anlagekante bilden und zwischen denen Ausnehmungen angeordnet sind, in denen Rastelemente einrastbar sind. Das bedeutet, dass das Distanzstück im Wesentlichen eine Gesamt-Anlagekante aufweist, die konvex gestaltet ist, die durch mindestens eine Ausnehmung unterbrochen ist. Diese Ausnehmung dient zur Einrastung von Rastelementen. Durch die Einrastung von Rastelementen in die Ausnehmung in der konkav gestalteten Anlagekante ist es möglich, das Distanzstück in einer vorher bestimmten Winkelposition zu fixieren. Diese Winkelposition kann zum Beispiel eine solche sein, in der der Abstand der konvex gestalteten Anlagekante zum gegenüberliegenden Federhakenschenkel beziehungsweise Sammelschienenkontaktstück im Federhaken ein derartiger ist, der der Dicke der Stromschiene entspricht, auf die der Federhaken aufgehangen werden soll. Die Einrastung wird dabei mit einer derartigen Einrastkraft vorgenommen, dass das Distanzstück mit einem zumutbaren Kraftaufwand weiterhin im Federhaken verdrehbar ist, aber ohne zusätzliche äußere Krafteinwirkung in der Einrastposition bleibt.

Vorteilhafterweise ist ein Distanzstück, welches an einem Ende der konvexen Anlagekante einen ersten Absatz zur Anlage an der Oberseite einer Stromschiene aufweist, am anderen Ende der konvexen Gesamt-Anlagekante, welches dem Ende gegenüberliegt, an welchem der erste Absatz angeordnet ist, mit einem zweiten Absatz zur Drehbewegungsbegrenzung ausgestattet. Dieser zweite Absatz dient dazu, dass eine Rasteinrichtung, die üblicherweise in die Vertiefungen, die im Verlauf der konvexen Gesamt-Anlagekante in diese in regelmäßigen Abständen eingebracht sind, eingreift, an diesem Absatz zur Begrenzung der Drehbewegung des Distanzstücks anliegt. Dieser Absatz ist derart dimensioniert, dass das Distanzstück in seiner Drehbewegung nicht über diesen Absatz hinaus bewegt werden kann.

In einer bevorzugten Ausführungsform ist das Distanzstück im Wesentlichen als eine kompakte Scheibe ausgebildet. Zur Versteifung kann es dabei Rippen aufweisen. Die Versteifungsrippen erstrecken sich vom Scheibenbereich zu einem zylinderförmigen zentralen Bereich, der entweder eine rohrähnliche Ausnahme zur Aufnahme einer Achse aufweist, oder der eine Aufnahmeeinrichtung zur Aufnahme einer Welle beziehungsweise die Welle selbst ist. Durch die Anordnung von Versteifungsrippen wird die Stabilität des Distanzstücks erhöht.

In einer alternativen Ausführungsform zur kompakten Scheibe ist das Distanzstück derart ausgestaltet, dass es in zwei zueinander parallel angeordneten Ebenen jeweils eine konvexe Anlagekante aufweist, welche über ein Mittelteil miteinander verbunden sind. Diese Ausführung hat den Vorteil, dass durch die relative Breite des Distanzstücks eine bessere Führung um seine Drehachse und eine bessere Kraftverteilung auf einen Federhaken gewährleistet wird. Vorzugsweise ist diese Ausführungsform mit dem konkav gestalteten Bereich am Distanzstück versehen, der die Drehbewegungsbahn definiert. Es kann alternativ dazu allerdings auch vorgesehen sein, dass das Distanzstück in dieser Ausführungsform auch die Aufnahmeeinrichtung für eine Achse oder eine Wellenbefestigung oder eine Welle selbst aufweist.

Bevorzugt ist das Mittelteil im Wesentlichen an einem Ende jeweils einer gesamten konvex gestalteten Anlagekante angeordnet. An dieses Mittelteil schließt sich eine Lasche an, welche sich zwischen den Ebenen, in denen die konvex gestalteten Bereiche liegen, im Wesentlichen zum gegenüberliegenden Ende der gesamten konvex gestalteten Anlagekante erstreckt. Das bedeutet, dass die Lasche von dem einen Ende der konvexen Gesamt-Anlagekante in gerader Linie in die Nähe des anderen Endes der konvex gestalteten Gesamt-Anlagekante geführt ist.

In einer alternativen Ausführungsform oder auch zusätzlich zu der Ausführungsform, in der in der konvex gestalteten Anlagekante Ausnehmungen für Einrastungen angeordnet sind, können in der Fläche, die durch die konvex gestaltete Anlagekante begrenzt ist, Einrichtungen zur Einrastung angeordnet sein. Eine solche Einrasteinrichtung kann zum Beispiel ein Loch sein, in dem ein am Federteil angeordneter Zapfen einrasten kann oder auch umgekehrt, es kann ein Zapfen sein, der in ein Loch einrasten kann. Diese Einrastmöglichkeit dient demselben Zweck wie die Einrastmöglichkeit in der konvex gestalteten Anlagekante, nämlich der Fixierung des Distanzstücks in einer bestimmten Winkelposition.

Eine Einrastausnehmung ist am in den Hakenöffnungsbereich hinausgeschwenkten Distanzstück dabei derart positioniert, dass ein minimaler Abstand zwischen konvexer Anlagekante des Distanzstücks und dem geräteseitigen Hakenschenkel im Wesentlichen der Dicke der Stromschiene entspricht. Des Weiteren kann ebenfalls wie an der konvex gestalteten Anlagekante auf der durch die konvex gestaltete Anlagekante begrenzten Fläche ein Absatz angeordnet sein kann, der zur Begrenzung der Drehbewegung des Distanzstücks dient.

Alternativ zu den bisher genannten Ausführungsformen kann das Distanzstück zentral auf dem Mittelteil einen zylindrischen Zapfen aufweisen, der in mindestens ein zylindrisches Loch in einer Abdeckung einrastbar ist. Somit lässt sich das Distanzstück in einer bestimmten Winkelposition am Federhaken positionieren. Der zylinderförmige Zapfen kann dabei in die Abdeckung eingreifen, wenn das Distanzstück sich im nicht ausgeklappten Zustand befindet, das heißt, wenn Federhaken und Distanzstück zum Aufschieben auf eine Stromschiene größerer Dicke vorbereitet sind. Der zylinderförmige Zapfen kann aber auch in ein weiteres Loch in der Abdeckung in der Winkelposition eingreifen, in der das Distanzstück vollständig aus dem Federhaken herausgeklappt und damit zum Aufschieben auf eine Stromschiene geringerer Dicke vorbereitet ist.

Um das Einrasten des zylinderförmigen Zapfens in ein Loch in der Abdeckung zu erleichtern, ist des Weiteren vorgesehen, dass das Distanzstück senkrecht zu den die konvexen Bereiche aufweisenden Ebenen stumpfwinklig zueinander verlaufende schräge Flächen aufweist, zwischen denen der zylindrische Zapfen angeordnet ist. Eine das Loch in der Abdeckung abgrenzende Kante kann somit beim Drehen des Distanzstückes in der Abdeckung über eine der schrägen Flächen gleiten und die Reibung zwischen Abdeckung und Distanzstück wird damit verringert.

Um die Drehbarkeit des Distanzstückes im Federhaken zu ermöglichen ist vorgesehen, dass an jeder der durch die konvexen Bereiche aufweisenden Ebenen geformten Seitenteile sich senkrecht dazu jeweils ein Achszapfen anschließt, durch die die Drehachse verläuft. Das heißt, dass die Längsachse der Achszapfen mit der Drehachse übereinstimmt.

Zur Erleichterung des Schwenkens des Distanzstückes in eine bestimmte Winkelposition ist am Distanzstück an dem Ende des konvexen Bereiches eines Seitenteiles, welches dem ersten Absatz gegenüberliegt, eine Eingriffsmulde angeordnet. Durch die Anordnung dieser Eingriffsmulde wird der manuelle Eingriff zum Verschwenken des Distanzstückes erleichtert.

Ein weiterer von der Erfindung umfasster Aspekt ist ein Federhaken zur Aufhängung eines elektrischen Gerätes auf einer Stromschiene, der wenigstens einen geräteseitigen Hakenschenkel aufweist, der an einem Gerät befestigt ist und des Weiteren wenigstens einen im Wesentlichen parallel zum geräteseitigen Hakenschenkel ausgebildeten klemmenden Hakenschenkel zur Aufnahme einer Klemmkraft und wenigstens einen die beiden Hakenschenkel verbindenden Verbindungssteg aufweist, und außerdem eine Einrichtung zur drehbaren Anordnung eines Distanzstücks umfasst, wobei die Drehachse der Einrichtung der drehbaren Befestigung des Distanzstücks am klemmenden Hakenschenkel angeordnet ist. Es bietet sich an, das erfindungsgemäße Distanzstück in diesen erfindungsgemäßen Federhaken zur Erzeugung einer Sammelschienenkontaktierung mit Schienenausgleich zu montieren.

Durch die Anordnung der Drehachse der Einrichtung zur drehbaren Befestigung des Distanzstücks am klemmenden Hakenschenkel ergibt sich der Vorteil, dass ein im Federhaken beziehungsweise in dessen Nähe angeordnetes Sammelschienenkontaktstück an einer Seite der Stromschiene angeordnet ist und das Distanzstück an der anderen Seite der Stromschiene angeordnet ist. Dadurch, dass das Sammelschienenkontaktstück und das Distanzstück räumlich voneinander getrennt angeordnet sind, ergibt sich die Möglichkeit einer einfachen konstruktiven Ausgestaltung der beiden Teile. Durch die Anordnung eines drehbaren Distanzstücks am klemmenden Hakenschenkel ergibt sich die Möglichkeit einer flexiblen Anpassung der lichten Weite im Hakenteil an die jeweilige Stromschienendicke. Dadurch, dass das Distanzstück im Federhaken drehbar gelagert ist, lässt es sich ein- beziehungsweise ausklappen und somit wiederverwendbar und unverlierbar befestigen.

In einer vorteilhaften Ausgestaltung weist der Federhaken in zwei parallel zueinander angeordneten Ebenen jeweils ein Hakenflächenelement auf, welches den geräteseitigen Hakenschenkel und den klemmenden Hakenschenkel umfasst, wobei die beiden Hakenflächenelemente über mindestens ein Verbindungsteil miteinander verbunden sind. Das Verbindungsteil ist dabei derart dimensioniert, dass die beiden Hakenflächenelemente starr zueinander positioniert sind. In einer alternativen Ausgestaltung kann der Federhaken aber auch derart ausgeführt sein, dass er ein kompaktes Bauteil ist, das heißt, dass er aus nur einem Hakenflächenelement besteht.

Vorteilhafterweise weist der Federhaken eine Druckfederaufnahmeeinrichtung auf. Die in dieser Druckfederaufnahmeeinrichtung im Federhaken aufnehmbare Druckfeder weist üblicherweise an ihrer der Druckfedereinrichtung gegenüberliegenden Seite ein Sammelschienenkontaktstück auf, und richtet ihre Druckkraft über dieses Sammelschienenkontaktstück gegen die Stromschiene, auf die der Federhaken aufgehangen ist. Die Beaufschlagung der Stromschiene mit der durch die Druckfeder erzeugten Druckkraft führt zur Anlage des auf der anderen Seite der Stromschiene an dieser anliegenden klemmenden Hakenschenkels beziehungsweise des Distanzstücks, wenn es aus dem klemmenden Federhakenschenkel heraus geschwenkt ist. Somit wird letztendlich durch die Druckfederkraft die sichere elektrische Kontaktierung zwischen Sammelschienenkontaktstück und Stromschiene hergestellt. Um im Bedarfsfall ebenfalls einen Stromfluss durch den Federhaken zu ermöglichen, ist vorgesehen, dass dieser aus einem elektrisch leitfähigen Material besteht.

Vorzugsweise ist vorgesehen, dass der Federhaken aus mehreren einzelnen Bauteilen hergestellt ist. Diese Herstellung aus mehreren Bauteilen kann zum Beispiel durch Verschweißung dieser Bauteile, wie zum Beispiel der einzelnen Hakenflächenelemente mit dem sie verbindenden Verbindungsteil, hergestellt werden. Alternativ dazu kann auch vorgesehen sein, dass der Federhaken einstückig hergestellt ist. In dieser Ausführungsform wird er zum Beispiel aus einem vorher zugeschnittenen Blechteil in seine Endform gebogen.

In einer vorteilhaften Ausführungsform ist vorgesehen, dass zumindest ein Bereich einer Anlagekante des klemmenden Hakenschenkels spitzwinklig zum geräteseitigen Hakenschenkel verläuft. Diese Ausgestaltung hat den Vorteil, dass bei eingeklapptem Distanzstück, also in einer Position des Distanzstücks, in der die lichte Weite des Hakenflächenelementes dem Abstand zwischen dem geräteseitigen Hakenschenkel und dem klemmenden Hakenschenkel entspricht, der Federhaken sich selbst zentrierend auf die Stromschiene aufgeschoben werden kann. Dies erleichtert die Montage des Federhakens beziehungsweise des mit dem Federhaken versehenen elektrischen Gerätes auf der Stromschiene.

Zu diesem Zweck kann auch das drehbar am klemmenden Hakenschenkel aufgenommene Distanzstück an einer dem konvexen Bereich gegenüberliegenden Seite im selben Winkelmaß abgeschrägt sein, um das Aufschieben des Federhakens auf eine Stromschiene bei eingeklapptem Distanzstück, also bei maximalem Öffnungsmaß des Federhakens, zu erleichtern.

Die Drehachse der Einrichtung zur drehbaren Befestigung des Distanzstücks am klemmenden Halteelement wird in einer Ausführungsform durch eine Achse zur Aufnahme des Distanzstücks gebildet. In einer weiteren Ausführungsform kann die Drehachse aber auch durch eine Einrichtung zur Aufnahme einer Welle gebildet sein. Alternativ dazu kann die Drehachse auch durch einen konvex gestalteten kreissegmentförmigen Bereich zur Drehbewegungsführung des Distanzstücks gebildet sein. In dieser Ausführungsform gleitet das Distanzstück mit dem eigenen kreissegmentförmigen konkaven Bereich auf dem kreissegmentförmigen konvex gestalteten Bereich des klemmenden Hakenschenkels auf einer Kreisbahn.

In einer bevorzugten Ausführungsform weist der Federhaken des Weiteren eine Abdeckung auf, die zumindest die Außenkontur des Hakenbereichs des Federhakens umhüllt. Diese Umhüllung der Außenkontur lässt die den Stromschienenflächen zugewandten Kanten der Hakenflächenelemente, also die innen liegenden Anlagekanten des klemmenden Hakenschenkels und des geräteseitigen Hakenschenkels, frei. Die Abdeckung selbst hat eine hakenähnliche Form, die der Außenkontur des Hakenbereichs des Federhakens angepasst ist. Vorzugsweise besteht die Abdeckung aus einem elektrisch isolierenden Material. Die elektrische Isolation schützt gegen Verletzungen bei manuellem Eingriff in die Schaltanlage sowie gegen ungewollte Kontaktierung anderer Bauteile mit dem Federhaken.

Bei einer Ausführungsform, in der ein konkav ausgestalteter Bereich eines Distanzstücks auf einem konvex ausgestalteten kreissegmentförmigen Bereich am klemmenden Hakenschenkel auf einer definierten Kreisbahn drehbar angeordnet ist, bildet die Abdeckung zusammen mit diesen konkaven beziehungsweise konvex ausgestalteten Bereichen die definierte Führung des Distanzstücks. Das heißt, dass die Abdeckung verhindert, dass sich das Distanzstück vom klemmenden Hakenschenkel ablösen beziehungsweise entfernen kann.

In vorteilhafter Ausgestaltung weist die Abdeckung an ihrem den klemmenden Hakenschenkel abdeckenden Ende eine Aussparung zur Eingriffsermöglichung auf. Durch diese Aussparung kann ein Bediener in den Raum innerhalb der Abdeckung eingreifen und manuell das Distanzstück greifen, um es in den Hakenbereich herauszuschwenken.

Um ein Distanzstück in einer bestimmte Winkelposition im Federhaken zu positionieren, ist vorgesehen, dass in der Abdeckung zumindest eine Einrasteinrichtung angeordnet ist. Diese Einrasteinrichtung ist dabei derart ausgestaltet, dass sie in eine komplementär eingerichtete Einrasteinrichtung am Distanzstück eingreift, wie zum Beispiel in eine Einrast-Ausnehmung, die in der konvex gestalteten Anlagekante des Distanzstücks angeordnet ist, oder auch in eine Bohrung beziehungsweise ein Loch, das in der durch die konvex gestaltete Anlagekante gebildeten Fläche des Distanzstücks angeordnet ist. Die Einrasteinrichtung in der Abdeckung kann dabei je nach Einrasteinrichtung im Distanzstück ein Vorsprung oder ein Zapfen sein, der in ein entsprechendes Loch oder Ausnehmung im Distanzstück eingreift oder auch ein Loch beziehungsweise Ausnehmung sein, in das ein Zapfen beziehungsweise ein Vorsprung, welcher am Distanzstück angeordnet ist, eingreift..

In vorteilhafter Weise ist die Einrasteinrichtung in der Abdeckung derart in dieser angeordnet und ausgestaltet, dass sie mit.einer Einrasteinrichtung an einer Anlagekante eines im Federhaken drehbar angeordneten Distanzstücks in Eingriff bringbar ist. Diese Ausgestaltung dient in Verbindung mit dem zum Distanzstück beschriebenen Absatz zur Drehbewegungsbegrenzung des Distanzstücks.

Alternativ zu den bisher beschriebenen Ausgestaltungen des Federhakens kann dieser auch eine Baueinheit sein, die sich aus zwei einzelnen zueinander parallel angeordneten Hakenflächenelementen zusammensetzt, die bis auf den Hakenöffnungsbereich von einer Abdeckung umschlossen ist.

Zur Fixierung der einzelnen Hakenflächenelemente in der Abdeckung ist vorgesehen, dass an der Außenseite des klemmenden Halteschenkels eines jeden Hakenflächenelementes eine Vertiefung zur Einrastung in der Abdeckung angeordnet ist und des Weiteren am geräteseitigen Halteschenkel ein Vorsprung zur Aufnahme in einem Schlitz in der Abdeckung angeordnet ist.

Die Erfindung wird anhand der beiliegenden Zeichnungen beschrieben. Es zeigen dabei
- FIG 1: eine Ausführungsform des Distanzstücks in Seitenansicht,
- FIG 2: eine weitere Ausführungsform eines Distanzstücks in perspektivischer Ansicht,
- FIG 3: eine andere perspektivische Darstellung der weiteren Ausführungsform des Distanzstücks,
- FIG 4: einen Federhaken in perspektivischer Ansicht,
- FIG 5: eine perspektivische Ansicht eines Federhakens mit eingebautem Distanzstück in eingeklappter Position,
- FIG 6: eine perspektivische Ansicht des Federhakens mit teilweise ausgeklapptem Distanzstück,
- FIG 7: eine perspektivische Ansicht des Federhakens mit in Endposition geschwenktem Distanzstück,
- FIG 8: eine weitere Ansicht des Federhakens mit eingeklapptem Distanzstück,
- FIG 9: eine Ansicht des Federhakens mit eingeklapptem Distanzstück beim Aufschieben auf eine dicke Stromschiene,
- FIG 10: eine Voreinstellung eines Distanzstücks für schmalere Stromschiene im Federhaken,
- FIG 11: eine Darstellung des Ansatzes des Distanzstücks auf schmalere Stromschiene,
- FIG 12: Federhaken mit Distanzstück auf schmalere Stromschiene aufgeschoben,
- FIG 13: eine Darstellung der Rastposition eines vollständig eingeschwenkten Distanzstücks,
- FIG 14: eine Darstellung der Rastposition eines voreingestellt ausgeschwenkten Distanzstücks,
- FIG 15: eine Darstellung der Rastposition eines vollständig ausgeklappten Distanzstücks,
- FIG 16: eine perspektivische Ansicht eines Federhakens mit eingebautem Distanzstück mit zusätzlich angeordneten Rollen,
- FIG 17: eine perspektivische Ansicht eines Federhakens mit einer weiteren Variante des Distanzstücks in ausgeklappter Position,
- FIG 18: eine Ansicht des Federhakens mit weiterer Ausführungsform des Distanzstücks in vollständig eingeklappter Position,
- FIG 19: eine Darstellung der Abdeckung für den Federhaken,
- FIG 20: ein ausgeklapptes Distanzstück im mit Abdeckung versehenem Federhaken,
- FIG 21: eine Darstellung des vollständig eingeklappten Distanzstücks in mit Abdeckung versehenem Federhaken,
- FIG 22: in Reihe angeordnete mit Abdeckung versehene Federhaken mit vollständig eingeklappten Distanzstücken;
- FIG 23: in Reihe angeordnete mit Abdeckung versehene Federhaken mit vollständig ausgeklappten Distanzstücken,
- FIG 24: ein Distanzstück einer weiteren Ausführungsform in perspektivischer Ansicht,
- FIG 25: das Distanzstück der weiteren Ausführungsform in Ansicht von vorn,
- FIG 26: das Distanzstück der weiteren Ausführungsform in Ansicht von der Seite,
- FIG 27: eine Schnittdarstellung des Schnittes A-A aus der Ansicht von vorn,
- FIG 28: eine Schnittdarstellung des Schnittes B-B aus der Ansicht von der Seite,
- FIG 29: ein Hakenflächenelement einer weiteren Ausführungsform in perspektivischer Ansicht und
- FIG 30: das Hakenflächenelement der weiteren Ausführungsform in Ansicht von vorn.

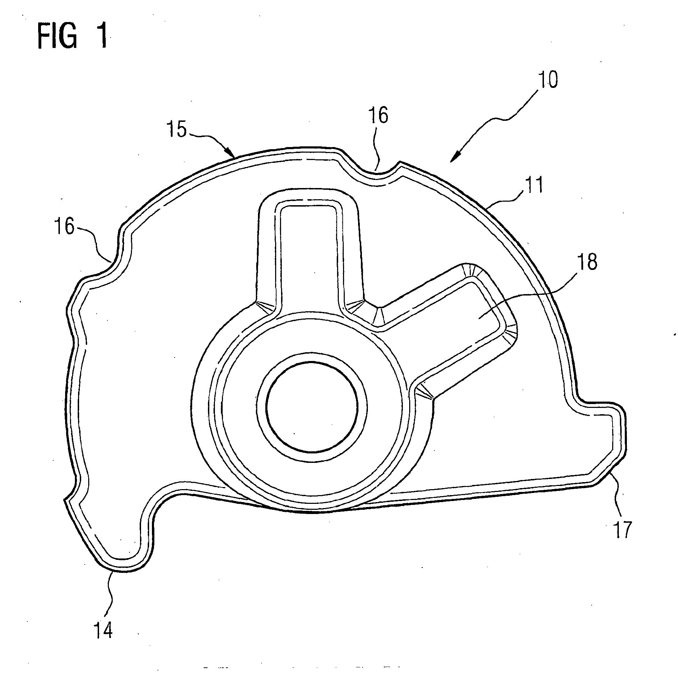

FIG 1 zeigt ein Distanzstück 10 in einer Ausführungsform. Das Distanzstück 10 weist eine konvexe Gesamt-Anlagekante 15 auf. Diese konvexe Gesamt-Anlagekante 15 ist durch Ausnehmungen 16 unterbrochen, so dass einzelne konvex gestaltete Kanten 11 entstehen. An den jeweiligen Enden der konvexen GesamtAnlagekante 15 befinden sich Absätze 14, 17. Zur Versteifung des Distanzstücks 10 weist es Versteifungsrippen 18 auf, die sich im Wesentlichen radial vom Zentrum nach außen erstrecken. Das dargestellte Distanzstück 10 hat eine Kreissegmentform. Es sind allerdings auch Ausführungsformen des Distanzstücks 10 möglich, in denen dieses eine exzenterförmig gestaltete konvexe Gesamt-Anlagekante 15 oder auch eine parabolisch oder exponentiell geformte konvexe Gesamt-Anlagekante 15 aufweist.

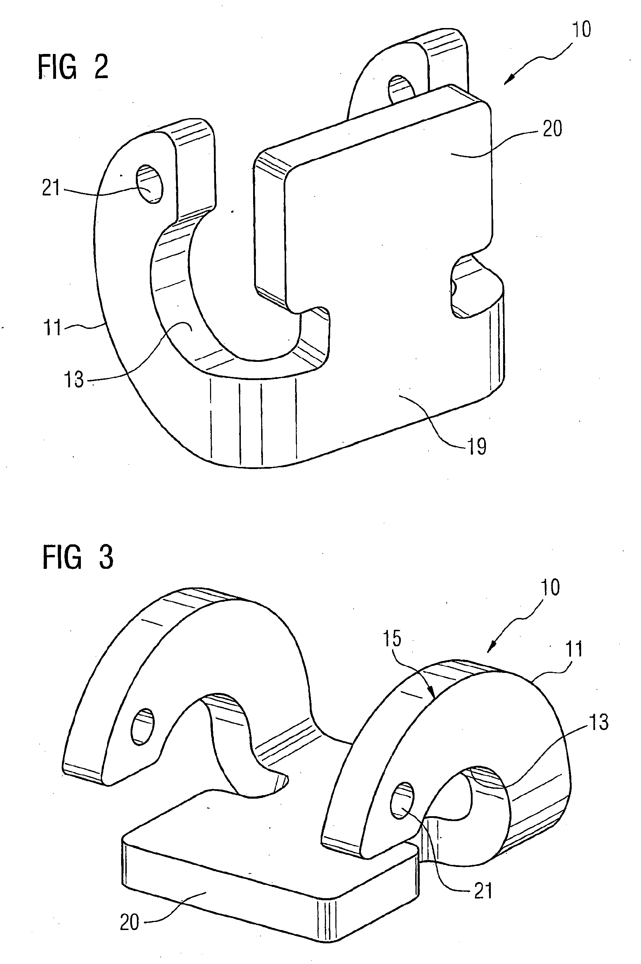

In den FIG 2 und 3 ist ein Distanzstück 10 in einer weiteren Ausführungsform abgebildet. Dieses Distanzstück 10 weist zwei in jeweils einer Ebene angeordnete konvex gestaltete Kanten 11 auf. Die Ebenen, in den die konvex gestalteten Anlagekanten 11 liegen, sind dabei parallel zueinander angeordnet. Beide konvex gestalteten Bereiche sind über ein Mittelteil 19 miteinander verbunden. An das Mittelteil 19 schließt sich eine Lasche 20 an, welche im Wesentlichen an das eine Ende des konvex gestalteten Bereiches zurückgeführt ist. Es sind des Weiteren im Distanzstück 10 zwei kreissegmentförmige konkave Bereiche 13 angeordnet, deren konkave Kante im Wesentlichen einen konstanten Abstand zur konvex gestalteten Kante 11 hat. In der durch den kreissegmentförmigen konkaven Bereich 13 und durch die konvex gestaltete Kante 11 aufgespannten Fläche sind Einrasteinrichtungen, hier in Form von Löchern 21, eingebracht.

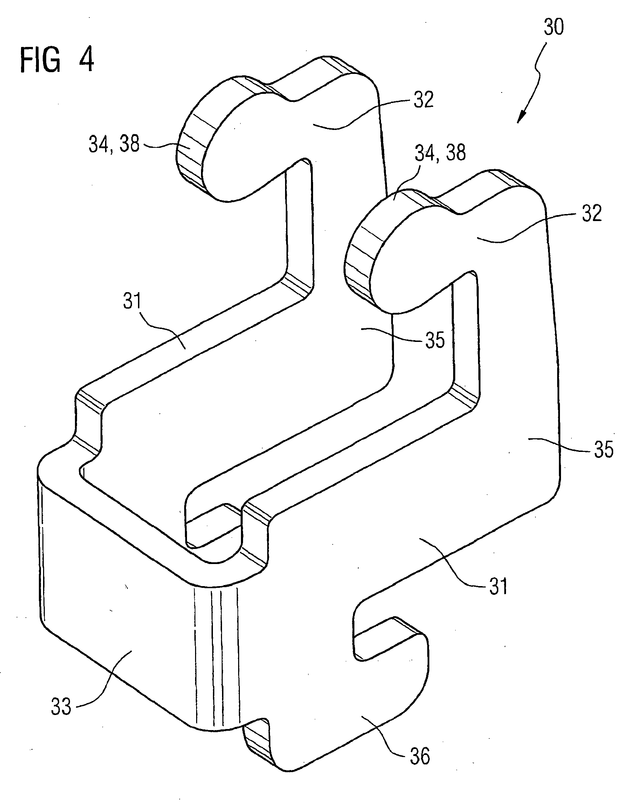

FIG 4 zeigt einen erfindungsgemäßen Federhaken 30. Dieser Federhaken 30 besteht im Wesentlichen aus zwei in parallelen Ebenen zueinander angeordneten Hakenflächenelementen 35, die über einen Verbindungssteg 33 miteinander verbunden sind. Jedes der einzelnen Hakenflächenelemente 35 weist einen geräteseitigen Hakenschenkel 31, einen klemmenden Hakenschenkel 32 und an diesem angeordnet eine Einrichtung zur drehbaren Befestigung eines Distanzstücks 34 auf. Des Weiteren weist jedes Hakenflächenelement eine Druckfederaufnahmeeinrichtung 36 auf. Die Einrichtung zur drehbaren Befestigung eines Distanzstücks 34 ist, wie dargestellt, ein konvexer kreissegmentförmiger Bereich 38 zur Drehbewegungsführung eines Distanzstücks 10.

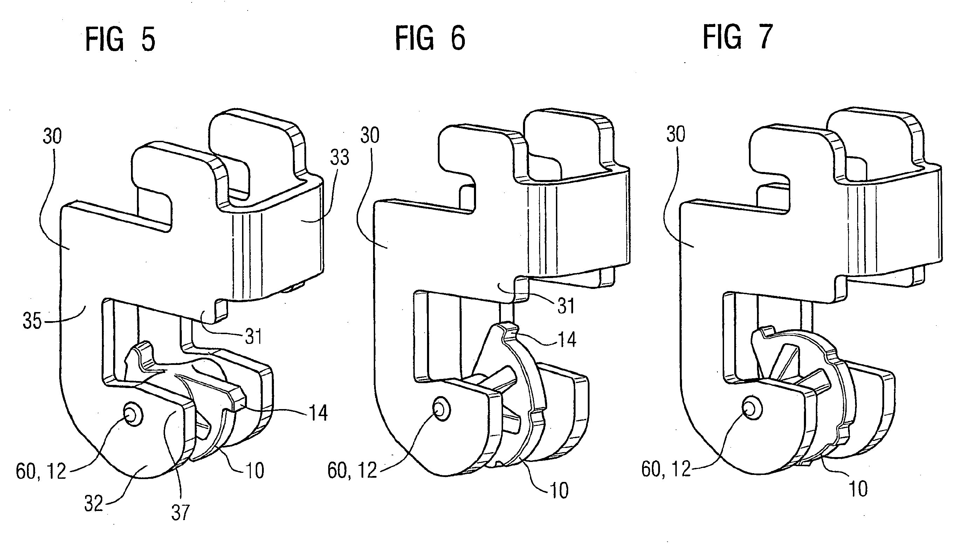

In den FIG 5 bis 16 ist ein erfindungsgemäßer Federhaken 30 dargestellt, in den ein erfindungsgemäßes Distanzstück 10 einer ersten Ausführungsform montiert ist.
FIG 5 zeigt dabei einen Federhaken 30, in dem ein Distanzstück 10 über dessen Welle 12 in beiden Hakenflächenelementen 35 drehbar gelagert ist. Die Welle 12 des Distanzstücks 10 bildet damit die Drehachse 60, um die das Distanzstück 10 rotiert. Deutlich ersichtlich ist eine spitzwinklig verlaufende Anlagekante 37 am klemmenden Hakenschenkel 32, die spitzwinklig zu der Anlagekante am geräteseitigen Hakenschenkel 31 verläuft.

In FIG 6 ist das Distanzstück 10 um einen bestimmten Winkelbetrag aus seiner eingeklappten Position in den Öffnungsbereich der Hakenflächenelemente 35 hinausgeschwenkt, so dass sein erster Absatz 14 der Kante des geräteseitigen Hakenschenkels 31 angenähert ist.

FIG 7 zeigt das Distanzstück 10 in einer vorgesehenen Winkel-End-Position.

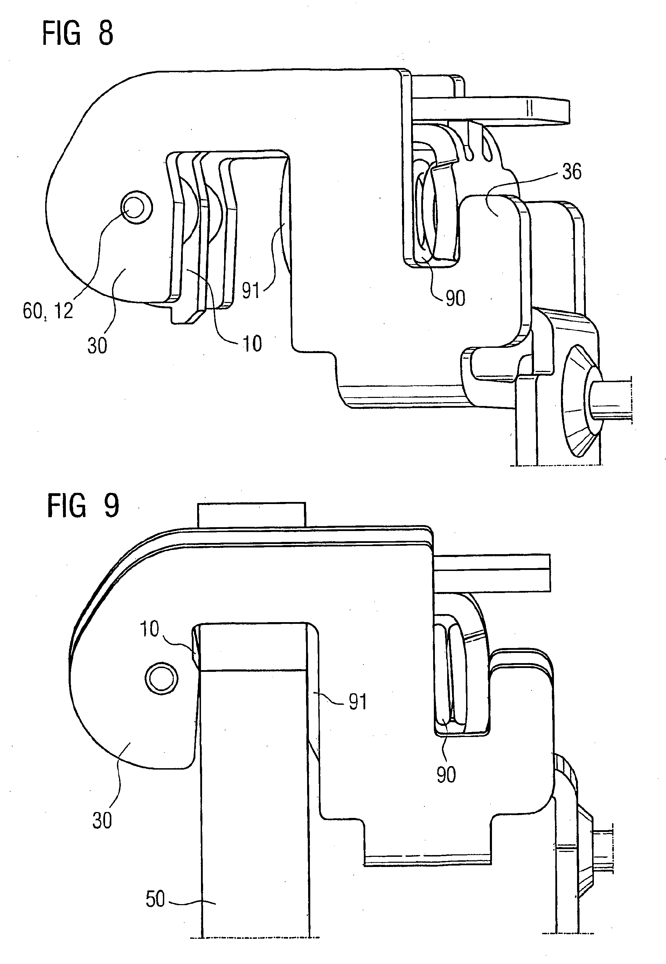

Die FIG 8 bis 12 verdeutlichen die Funktion des Federhakens 30 und des Distanzstücks 10 beim Aufsetzen auf Stromschienen 50 unterschiedlicher Dicke.

In FIG 8 ist der Federhaken 30 mit einem vollständig eingeklappten Distanzstück 10 dargestellt. In der Druckfederaufnahmeeinrichtung 36 ist eine Druckfeder 90 angeordnet, an deren hakenöffnungsseitigem Ende ein Sammelschienenkontaktstück 91 angeordnet ist. Der derart ausgestaltete Federhaken 30 und das eingeklappte Distanzstück 10 sind somit für das Aufsetzen auf eine Stromschiene größerer Dicke vorbereitet.

In FIG 9 ist der Federhaken 30 während des Aufschiebens auf eine Stromschiene 50 dargestellt. Es ist ersichtlich, dass ein Bereich des Distanzstücks 10, welches vollständig in den Federhaken 30 eingeklappt ist, sowie das druckfederkraftbeaufschlagte Sammelschienenkontaktstück 91 an den Seitenflächen der Stromschiene entlang gleiten. Der Federhaken wird soweit auf die Stromschiene 50 aufgeschoben, bis entweder die Reibkräfte unüberwindbar werden oder die Stromschiene 50 mit ihrer Oberseite 51 am Federhaken 30 anliegt.

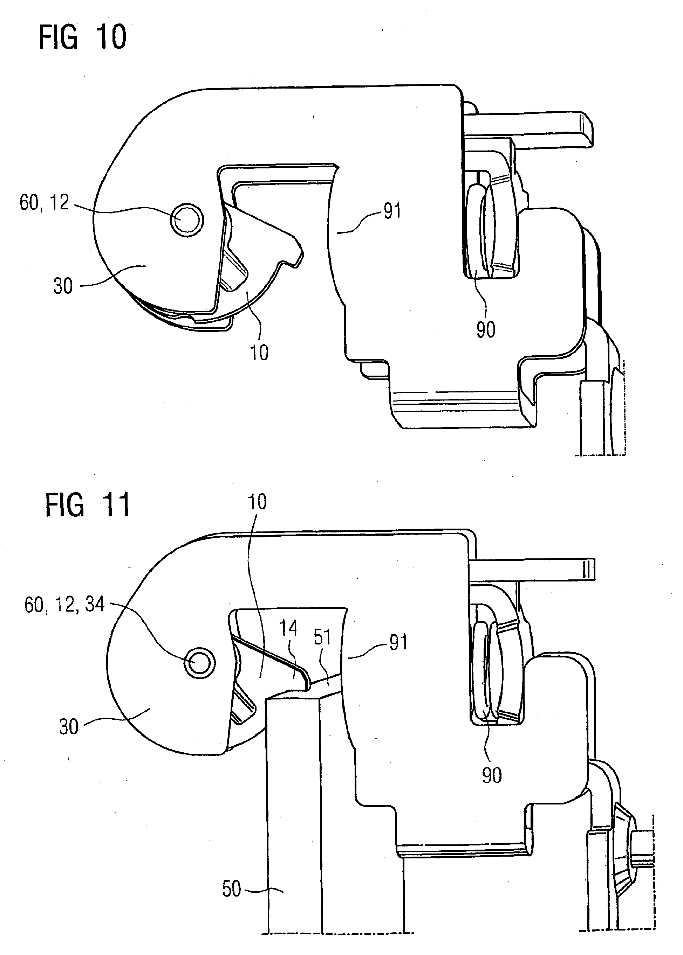

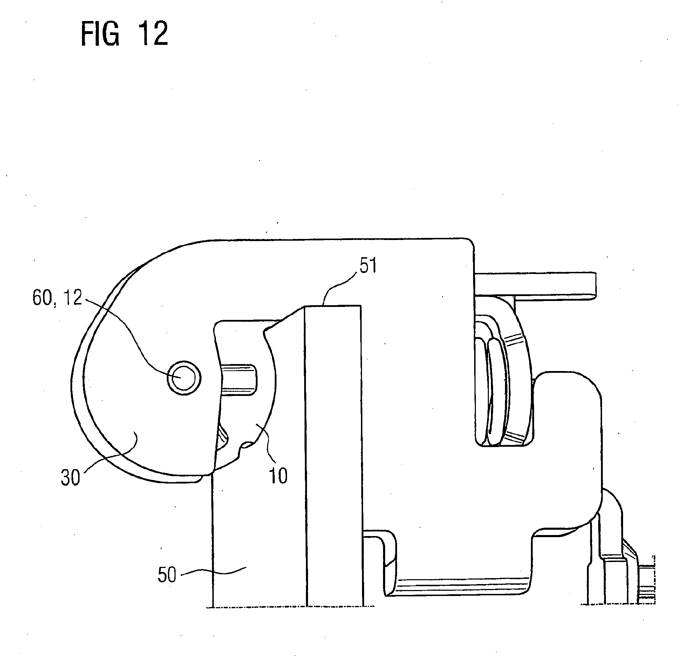

In FIG 10 ist die Voreinstellung eines Distanzstücks 10 im Federhaken 30 zum Aufsetzen des Federhakens 30 auf eine Stromschiene geringerer Dicke dargestellt. In FIG 11 ist dargestellt, wie sich der erste Absatz 14 am Distanzstück 10 auf die Oberseite 51 der Stromschiene 50 mit geringerer Dicke beim Aufsetzprozess des Federhakens 30 auf die Stromschiene 50 anlegt. Beim weiteren Aufschieben des Federhakens 30 auf die Stromschiene 50 drückt somit die Oberseite 51 der Stromschiene 50 gegen diesen Absatz 14 des Distanzstücks 10 und bewirkt damit eine Rotation des Distanzstücks 10 um deren durch die Welle 12 ausgebildete Drehachse, bis die Oberseite 51 der Stromschiene 50 am Federhaken 30 beziehungsweise an dessen Hakenflächenelementen 35 anliegt, wie in FIG 12 dargestellt. Die durch die Druckfeder 90 aufgebrachte Druckkraft wird auf das Sammelschienenkontaktstück 91 übertragen, welches wiederum an der Stromschiene 50 anliegt. Diese Druckkraft wird weiterhin auf das an der Stromschiene 50 anliegende Distanzstück 10 und von diesem über dessen Welle 12 in die Einrichtung zur drehbaren Befestigung eines Distanzstücks 34 im Federhaken 30 geleitet. Dadurch, dass das Distanzstück 10 drehbar im Federhaken 30 gelagert ist, ergibt sich beim Aufschieben des Federhakens 30 auf der Stromschiene 50 keine Reibkraft zwischen Distanzstück 10 und Stromschiene 5. Die einzige Reibkraft, die beim Aufschieben des Federhakens 30 auf die Stromschiene 50 auftritt, ist die Reibkraft zwischen Sammelschienenkontaktstück 91 und Stromschiene 50. Diese Verringerung der Reibkräfte führt zu einer wesentlichen Entlastung des Montagepersonals beim Aufhängen des elektrischen Gerätes 70 auf der Stromschiene 50 sowie zu einem geringeren Verschleiß der an der Stromschiene 50 anliegenden Bauteile. Beim Abziehen beziehungsweise Abnehmen des Gerätes 70 von der Stromschiene 50 rollt ebenfalls wieder das Distanzstück 10 auf der Stromschiene ab, wobei auch hier keine Reibkräfte zwischen Distanzstück 10 und Stromschiene 50 entstehen.

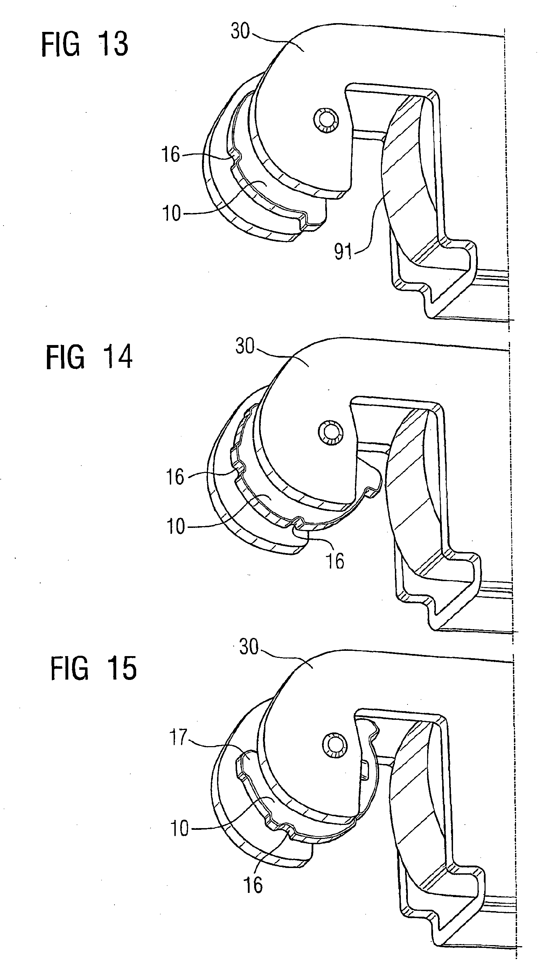

Die FIG 13 bis 15 verdeutlichen die Verrastung des Distanzstücks 10 in unterschiedlichen Winkelpositionen im Federhaken 30. In FIG 13 ist das Distanzstück 10 im vollständig in den Federhaken 30 eingeklapptem Zustand dargestellt. In diesem Zustand greift in die Ausnehmung 16, die in der konvexen Gesamt-Anlagekante 15 des Distanzstücks 10 angeordnet ist, ein Rastelement (nicht dargestellt) ein.

Bei einer Voreinstellung des Distanzstücks 10 in eine Winkelposition, in der das Distanzstück 10 und der Federhaken 30 zum Aufsetzen auf eine Stromschiene 50 mit geringerer Dicke vorbereitet sind, befindet sich eine Ausnehmung 16 genau in der Position, in der sich eine andere Ausnehmung 16 in der in FIG 13 dargestellten Winkelposition des Distanzstücks 10 befand. Das bedeutet, dass durch die Einrastung eines Einrastelements (nicht dargestellt) in die Ausnehmung 16 in der in FIG 14 dargestellten Winkelposition des Distanzstücks 10 dieses in dieser Winkelposition eingerastet ist. Die Einrastkraft ist dabei so groß, dass das Distanzstück 10 in dieser Winkelposition festgehalten wird. Beim vollständigen Aufschieben des Federhakens 30 auf eine Stromschiene 50 wird allerdings die Einrastkraft überwunden, so dass das Distanzstück 10 auf der Stromschiene 50 wie beschrieben abrollen kann. In FIG 15 ist das Distanzstück 10 im Federhaken 30 in seiner Dreh-End-Position dargestellt. In dieser Winkelposition befindet sich an der Stelle, in der sich in den FIG 13 und 14 eine Ausnehmung 16 befand, die Anlagekante des zweiten Absatzes 17, der an der konvexen Gesamt-Anlagekante 15 angeordnet ist. Dieser zweite Absatz 17 weist einen größeren Abstand zur Drehachse 60 als die an ihn anschließende konvex gestaltete Kante 11 auf. Durch diese Formgebung wird eine weitere Drehung des Distanzstücks 10 um seine Welle 12 beziehungsweise Drehachse 60 verhindert.

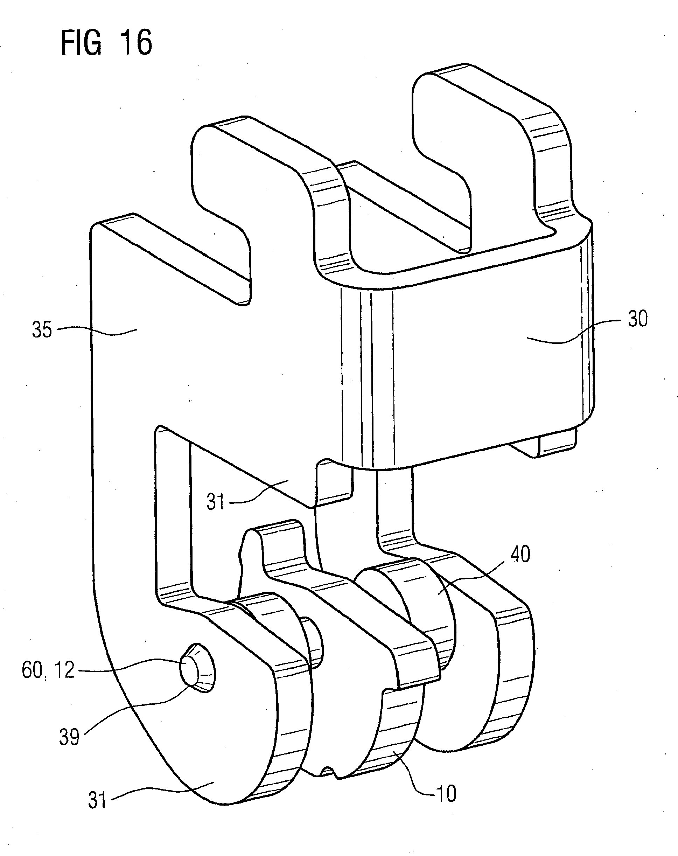

FIG 16 zeigt den erfindungsgemäßen Federhaken 30 mit in ihm montierten Distanzstück 10 in einer ersten Ausführungsform. Die Drehachse 60 des Distanzstücks 10 bildet eine mit dem Distanzstück 10 verbundene Welle 12. Diese Welle 12 ist in einer Einrichtung zur Aufnahme einer Welle 39 in jedem der Hakenflächenelemente 35 gelagert. Auf dieser Welle 12 befinden sich zusätzlich Rollen 40. Diese Rollen 40 weisen einen derartigen Durchmesser auf, dass ihre Umfangskante einen geringeren Abstand zum geräteseitigen Hakenschenkel 31 aufweist als der Abstand des klemmenden Hakenschenkels 32 zum geräteseitigen Hakenschenkel 31 beträgt. Somit kann der Federhaken 30 bei in ihm vollständig eingeklappt angeordnetem Distanzstück 10 beim Aufschieben auf eine Stromschiene 50 größerer Dicke auf einer Seite der Stromschiene 50 mittels der drehbar angeordneten Rollen 40 abrollen. Diese Einrichtung bewirkt ebenfalls eine Verringerung der Reibkräfte beim Aufschiebeprozess und damit eine geringere Belastung für das Montagepersonal sowie einen geringeren Verschleiß der an der Stromschiene 50 anliegenden Bauteile.

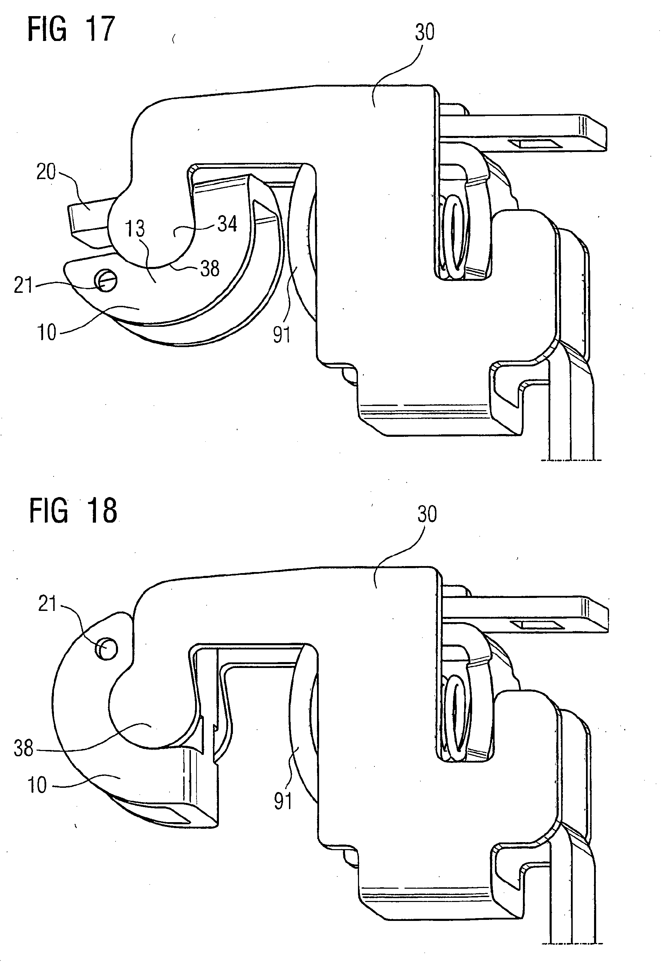

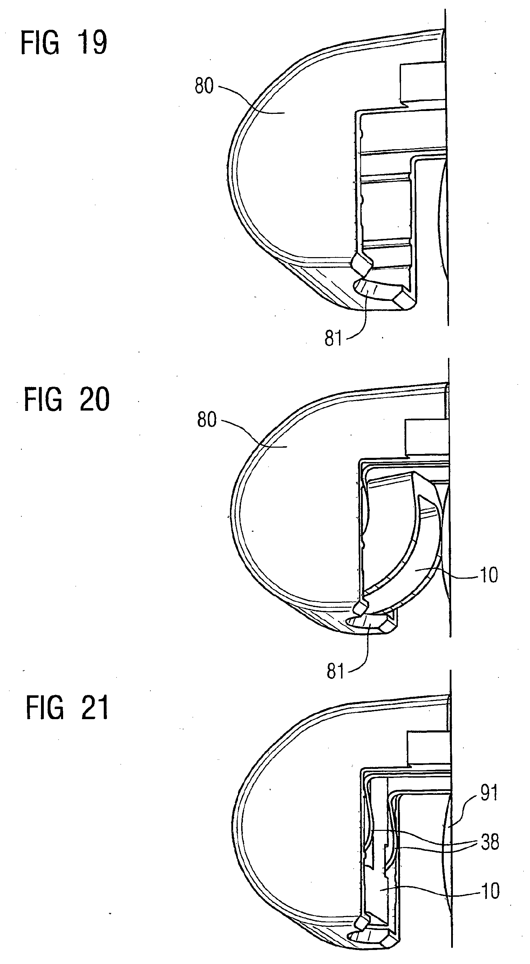

In den FIG 17 und 18 ist ein Distanzstück 10 in einer weiteren Ausführungsform am Federhaken 30 angeordnet. Ein kreissegmentförmiger konkaver Bereich 13 des Distanzstücks 10 gleitet bei der Schwenkbewegung des Distanzstücks 10 auf der Einrichtung zur drehbaren Befestigung eines Distanzstücks 34, welches einen konvexen kreissegmentförmigen Bereich 38 aufweist, auf einer Kreisbahn. Ein Ablösen des Distanzstücks 10 vom Federhaken 30 wird durch die Anordnung einer Abdeckung 80, wie zum Beispiel in FIG 20 dargestellt, verhindert. FIG 17 zeigt das erfindungsgemäße Distanzstück 10 in einer Winkelposition, in der es zum Aufschieben des Federhakens 30 auf eine Stromschiene 50 mit geringerer Dicke eingestellt ist. Eine Einrasteinrichtung 21, die als Loch beziehungsweise Bohrung in der die konvexe Anlagenkante bildenden Fläche ausgebildet ist, funktioniert im Zusammenwirken mit einer Einrasteinrichtung in der Abdeckung 80 (nicht dargestellt) als Fixierungseinrichtung des Distanzstücks 10 in einer bestimmten Winkelposition. Das Ende der Lasche 20, welche am Distanzstück 10 angeordnet ist, reicht im Wesentlichen an die durch die konvexe Gesamt-Anlagekante 15 definierte Kreisbahn heran. Damit bewirkt die Lasche 20 eine zusätzliche Abstützung in der das Distanzstück 10 und den Federhaken 30 umhüllenden Abdeckung 80. Beim Aufschieben des Federhakens 30 mit dem wie in FIG 17 dargestellten voreingestellten Distanzstück 10 in einer bestimmten Winkelposition zum Aufschieben auf eine Stromschiene 50 geringerer Dicke, reibt das druckfederkraftbeaufschlagte Sammelschienenkontaktstück 91 auf einer Seite der Stromschiene 50 (nicht dargestellt) und das Distanzstück 10 auf der anderen Seite der Stromschiene 50. Bei einer Schwenkung des Distanzstücks 10 in eine Stellung, in der der Federhaken 30 zum Aufstecken auf eine Stromschiene 50 größerer Dicke vorbereitet ist, wie zum Beispiel in FIG 18 dargestellt, wird der minimale Abstand zwischen klemmendem Hakenschenkel 32 und geräteseitigem Hakenschenkel 31 durch das hervorstehende Sammelschienenkontaktstück 91 auf der einen Seite und durch einen Abschnitt des konvexen kreissegmentförmigen Bereichs 38 am klemmenden Hakenschenkel 32 ausgebildet. Das bedeutet, dass in dieser Einstellung des Distanzstücks 10 das Sammelschienenkontaktstück 91 auf der einen Seite der Stromschiene 50 (nicht dargestellt) beim Aufschieben entlang gleitet und auf der anderen Seite der leicht hervorstehende Abschnitt am konvexen kreissegmentförmigen Bereich 38 am klemmenden Hakenschenkel 32 auf der Stromschiene 50 entlang gleitet.

In FIG 19 ist eine Abdeckung dargestellt, welche den Federhaken 30 sowie ein in den Federhaken 30 eingeschwenktes Distanzstück 10 abdeckt. Die Abdeckung liegt dabei so dicht beziehungsweise eng am Federhaken 30 an, dass ein in ihm über konkav und konvex gestaltete Anlagekanten des Federhakens 30 beziehungsweise des Distanzstücks 10 geführtes Distanzstück 10 unverlierbar am Federhaken 30 angeordnet ist. Durch die innere Formgestaltung der Abdeckung 80 wird ebenfalls zusammen mit den konkav beziehungsweise konvex gestalteten Anlagekanten am Federhaken 30 und am Distanzstück 10 die Drehbewegungsbahn des Distanzstücks 10 am Federhaken 30 definiert. Um für den Bediener die Voreinstellung des Distanzstücks 10 in einer bestimmten Winkelposition zu erleichtern, in der das Distanzstück 10 beziehungsweise der Federhaken 30 zum Aufsetzen auf eine Stromschiene 50 geringerer Dicke vorbereitet ist, weist die Abdeckung 80 an ihrem unteren Ende eine Aussparung 81 auf, durch die der Bediener in den Innenraum der Abdeckung 80 eingreifen kann und das Distanzstück 10 in den Hakenöffnungsbereich herausschwenken kann.

In FIG 20 ist ein Distanzstück 10 in herausgeschwenktem Zustand aus einem mit einer Abdeckung 80 versehenen Federhaken 30 dargestellt. In FIG 21 ist das Distanzstück 10 vollständig in den Federhaken 30 beziehungsweise in die Abdeckung 80 eingeschwenkt. Deutlich ersichtlich ist ein Abschnitt des konvexen kreissegmentförmigen Bereichs 38 am klemmenden Hakenschenkel 32, der zusammen mit dem Sammelschienenkontaktstück 91 die Anlagepunkte beziehungsweise Anlagefläche an der Stromschiene 50 ausbildet.

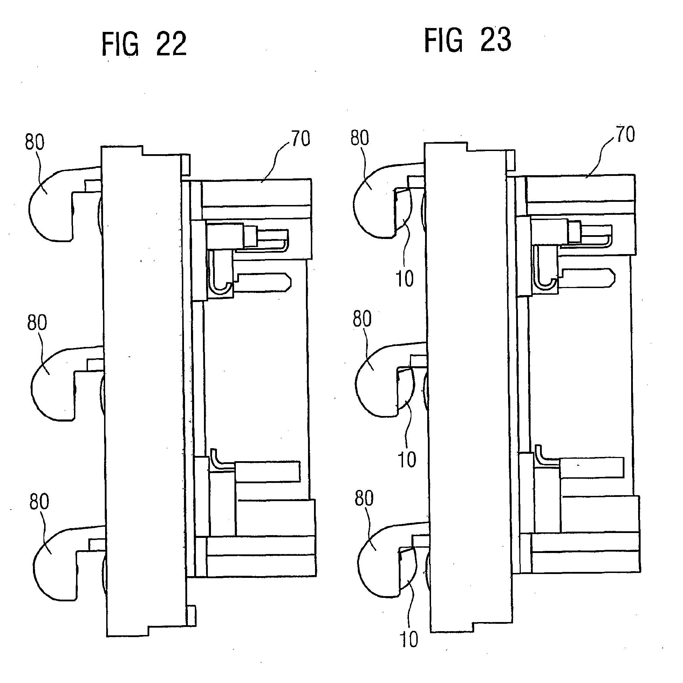

In den FIG 22 und 23 sind mehrere mit einer Abdeckung 80 versehene Federhaken 30 an einem Gerät 70 angeordnet. FIG 22 stellt die mit Abdeckung 80 versehenen Federhaken 30 mit in ihnen vollständig eingeschwenkten Distanzstücken 10 dar. In dieser Position ist das Gerät 70 mit den an ihm angebrachten Federhaken 30 zum Aufsetzen auf Stromschienen größerer Dicke eingestellt. In FIG 23 sind die Distanzstücken 10 aus den mit einer Abdeckung 80 versehenen Federhaken 30 herausgeschwenkt, so dass das Gerät 70 auf Stromschienen geringerer Dicke aufgesetzt werden kann.

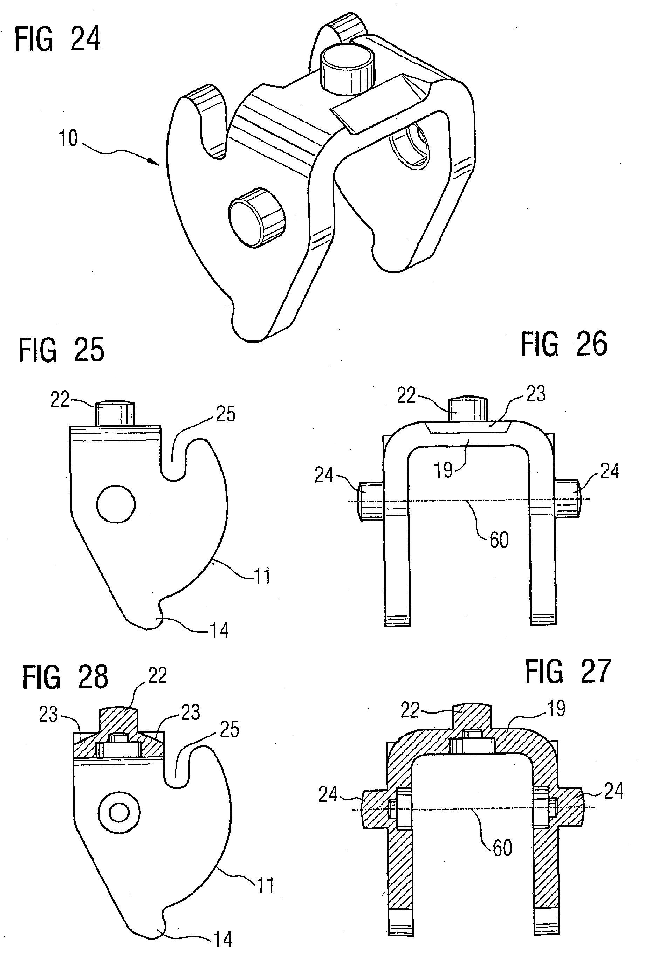

In den FIG 24 bis 28 ist eine weitere konstruktive Ausgestaltung eines erfindungsgemäßen Distanzstückes dargestellt.

In der perspektivischen Ansicht in FIG 24 ist der U-förmige Aufbau des erfindungsgemäßen Distanzstückes 10 gezeigt. Auch diese Ausführungsform des Distanzstückes 10 weist somit zwei Seitenteile und ein diese miteinander verbindendes Mittelteil 19 auf.

In FIG 25, in der Darstellung des Distanzstückes 10 in der Ansicht von vorne, ist der Absatz 14 an einem Ende des konvexen Bereiches 11 am Distanzstück 10 ersichtlich. Wie auch in den vorher beschriebenen Ausführungsformen dient dieser Absatz 14 zur Anlage an die Oberseite beziehungsweise Oberkante der Stromschiene 50. Beim Aufschieben des in einem Federhaken 30 integrierten Distanzstückes 10 auf die Stromschiene 50 bewirkt dieser Absatz 14 somit ein Abrollen des Distanzstückes 10 über seinen konvexen Bereich 11 auf der Stromschiene 50.

Wie in den FIG 25 und 28 ersichtlich, ist eine Eingriffsmulde 25 am Distanzstück 10 angeordnet. Diese Eingriffsmulde 25 ermöglicht in einfacher Weise den manuellen Eingriff eines Bedieners am Distanzstück 10, um dieses in eine bestimmte Winkelposition zu verschwenken.

Aus den FIG 24 bis 28 ist des Weiteren ersichtlich, dass ein zylinderförmiger Zapfen 22 am Mittelteil 19 des Distanzstückes 10 angeordnet ist.

In den FIG 26 und 27 ist dargestellt, dass der zylindri-sche Zapfen 22 mittig zwischen den Seitenteilen, die jeweils einen konvexen Bereich aufweisen, angeordnet ist.

Wie insbesondere aus der FIG 28 ersichtlich ist, befindet sich der Zapfen 22 ebenfalls zentral zwischen zwei an ihn angrenzenden schrägen Flächen 23. Diese schrägen Flächen 23 erleichtern das Gleiten des Distanzstückes 10 in der Abdeckung 80, insbesondere in der Nähe der Stellen, an denen der zylinderförmige Zapfen 22 in ein Loch in der Abdeckung 80 eingeschwenkt wird.

Zum Ermöglichen der Drehbewegung des Distanzstückes 10 in der Abdeckung 80 beziehungsweise im Federhaken 30 weist das Distanzstück 10 an jeder der einen konvexen Bereich 11 bildenden Seitenteile senkrecht zu den den konvexen Bereich 11 aufweisenden Ebenen einen Achszapfen 24 auf. Diese Achszapfen 24 werden in entsprechende Aufnahmeöffnungen im Federhaken 30 aufgenommen und ermöglichen somit eine Drehbewegung um die Längsachse der Drehzapfen 24, die der Drehachse 60 entspricht. Aus Gründen der Fertigungsvereinfachung hat das Distanzstück 10 an den Stellen, an denen es einen Zapfen 22 beziehungsweise 24 aufweist, auf der der Zapfenseite gegenüberliegenden Materialseite negative Volumenelemente. Diese negativen Volumenelemente sind durch das Herauspressen des Zapfenmaterials aus dem Material des Mittelteils 19 des Distanzstückes 10 beziehungsweise aus den Seitenteilen entstanden.

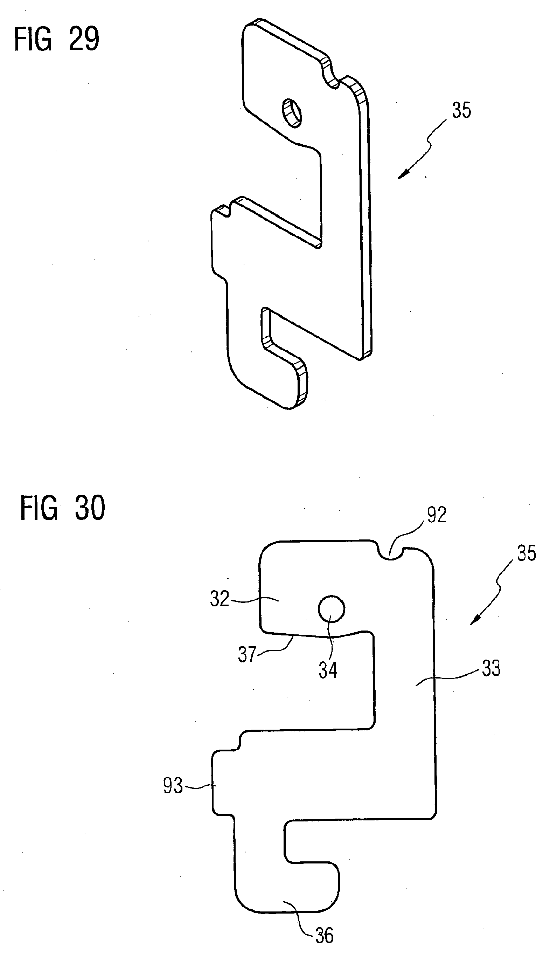

In den FIG 29 und 30 ist ein Hakenflächenelement 35 dargestellt. In der perspektivischen Ansicht des Hakenflächenelementes 35 in FIG 29 ist ersichtlich, dass das Hakenflächenelement 35 im Wesentlichen aus einem Flachmaterial hergestellt ist.

FIG 30 zeigt ein Hakenflächenelement 35, welches einen geräteseitigen Halteschenkel 31, einen klemmenden Halteschenkel 32, einen die beiden Halteschenkel verbindenden Verbindungssteg 33 sowie eine Druckfederaufnahmeeinrichtung 36 aufweist. Im klemmenden Halteschenkel 32 ist erfindungsgemäß die Einrichtung 34 zur drehbaren Befestigung eines Distanzstückes 10 angeordnet. Ebenfalls weist der klemmende Halteschenkel 32 eine spitzwinklig verlaufende Anlagekante 37 auf. An seinem oberen Ende hat der klemmende Halteschenkel 32 des Weiteren eine Vertiefung 92, in die ein entsprechendes Formelement einer Abdeckung 80 eingreifen kann. Am unteren Ende des geräteseitigen Halteschenkels 31 weist dieser einen Vorsprung 93 auf, der in einen Schlitz in der Abdeckung 80 eingreifen kann. Durch die Ausgestaltung des Hakenflächenelementes 35 mit den Formelementen der Vertiefung 92 und des Vorsprunges 93 kann ein Hakenflächenelement 35 im parallelen Abstand zu einem weiteren derartig ausgebildeten Hakenflächenelement 35 in einer Abdeckung 80 formschlüssig angeordnet werden. Durch die Ausbildung der Vertiefung 92 und des Vorsprunges 93 ist ein jedes Hakenflächenelement 35, gegebenenfalls im Zusammenhang mit weiteren Einspann- beziehungsweise Einrasteinrichtungen derart fest in der Abdeckung 80 fixiert, dass ein Distanzstück 10 mit einem Achszapfen 24 in je eine Einrichtung 34 zur drehbaren Befestigung eines Distanzstückes 10 gesteckt werden kann. Somit bildet sich ein kompletter Federhaken 30 durch die Anordnung von zwei erfindungsgemäßen Hakenflächenelementen 35 in einer Abdeckung 80 heraus.

## Patentansprüche

1. Distanzstück (10) zur Anpassung eines Abstandes in einem Federhaken (30) an die Dicke einer Stromschiene (50), welche zwischen die einander gegenüberliegenden Hakenschenkel (31), (32) des Federhakens (30) schiebbar ist, wobei das Distanzstück (10) um eine am Federhaken (30) angeordnete und längs der Stromschiene (50) verlaufende Drehachse (60) drehbar gelagert ist, wobei
die Drehachse (60) an einem Hakenschenkel (32) angeordnet ist, **dadurch gekennzeichnet, dass** das Distanzstück (10) zur Anlage an der Stromschiene (50) wenigstens einen konvex gestalteten Kanten-Bereich (11) aufweist, der durch Drehung um die Drehachse (60) aus dem Hakenschenkel (32) ausklappbar ist und dem ein an dem anderen Hakenschenkel (31) angeordnetes und Druckfederkraft beaufschlagtes Sammelschienenkontaktstück (91) gegenüberliegt, welches die Stromschiene (50) gegen den Kanten-Bereich (11) drückt.

2. Distanzstück nach Anspruch 1, **dadurch gekennzeichnet, dass** das Distanzstück (10) derart ausgestaltet ist, dass es sich bei Kraftbeaufschlagung beim Aufschieben auf die Stromschiene (50) am Federhaken (30) abstützen kann.

3. Distanzstück nach einem der vorhergehenden Ansprüche, **dadurch gekennzeichnet, dass** es eine Öffnung zur Hindurchführung einer Drehachse (60) aufweist.

4. Distanzstück nach einem der Ansprüche 1 bis 2, **dadurch gekennzeichnet, dass** es eine Welle umfasst.

5. Distanzstück nach einem der Ansprüche 1 bis 2, **dadurch gekennzeichnet, dass** es einen kreissegmentförmigen konkaven Bereich (13) aufweist, der bei Anlage an einen entsprechend kreissegmentförmig gestalteten konvexen Bereich (38) eines Gegenstücks die Drehbewegungsbahn definiert.

6. Distanzstück nach einem der vorhergehenden Ansprüche, **dadurch gekennzeichnet, dass** der konvex geformte Bereich (11) am Distanzstück (10) ein Kreissegment ist.

7. Distanzstück nach Anspruch 6, **dadurch gekennzeichnet, dass** sich die Drehachse (60) des Distanzstücks (10) im Zentrum des Kreissegmentes befindet.

8. Distanzstück nach einem der Ansprüche 1 bis 5, **dadurch gekennzeichnet, dass** der konvex geformte Bereich (11) eine Exzenterscheibe ausbildet.

9. Distanzstück nach einem der vorhergehenden Ansprüche, **dadurch gekennzeichnet, dass** an einem Ende einer Anlagekante des konvexen Bereichs (11) ein erster Absatz (14) angebracht ist zur Anlage an der Oberseite (51) einer Stromschiene (50).

10. Distanzstück nach einem der vorhergehenden Ansprüche, **dadurch gekennzeichnet, dass** das Distanzstück (10) eine Mehrzahl von konvex gestalteten Anlagekanten aufweist, die im Wesentlichen eine konvexe Gesamt-Anlagekante (15) bilden und zwischen den konvex gestalteten Anlagekanten Ausnehmungen (16) angeordnet sind, in denen Rastelemente einrastbar sind.

11. Distanzstück nach Ansprüchen 9 und 10, **dadurch gekennzeichnet, dass** am dem Ende der konvexen Gesamt-Anlagekante (15), das dem Ende gegenüberliegt, an welchem der erste Absatz (14) angeordnet ist, ein zweiter Absatz (17) zur Drehbewegungsbegrenzung angeordnet ist.

12. Distanzstück nach einem der vorhergehenden Ansprüche, **dadurch gekennzeichnet, dass** es im Wesentlichen als eine kompakte Scheibe ausgebildet ist.

13. Distanzstück nach einem der Ansprüche 3 und 4 und nach Anspruch 12, **dadurch gekennzeichnet, dass** es Versteifungsrippen (18) aufweist.

14. Distanzstück nach einem der Ansprüche 1 bis 11, **da-durch gekennzeichnet**, dass es in zwei zueinander parallel angeordneten Ebenen zwei konvexe Bereiche (11) aufweist, welche über ein Mittelteil (19) miteinander verbunden sind.

15. Distanzstück nach Anspruch 14, **dadurch gekennzeichnet, dass** das Mittelteil (19) im Wesentlichen an jeweils dem einen Ende der gesamten Anlagekante (15) des konvex gestalteten Bereiches (11) angeordnet ist und sich an dieses eine Lasche (20) anschließt, welche zwischen den Ebenen, in denen die konvex gestalteten Bereiche (11) liegen, im Wesentlichen zum gegenüberliegenden Ende der gesamten konvex gestalteten Anlagekante (15) erstreckt.

16. Distanzstück nach einem der vorhergehenden Ansprüche, **dadurch gekennzeichnet, dass** in der den konvexen Bereich (11) aufweisenden Fläche mindestens eine Einrasteinrichtung (21) angeordnet ist.

17. Distanzstück nach einem der vorhergehenden Ansprüche, **dadurch gekennzeichnet, dass** auf der den konvexen Bereich (11) bildenden Fläche mindestens ein Absatz zur Drehbewegungsbegrenzung angeordnet ist.

18. Distanzstück nach Anspruch 14, **dadurch gekennzeichnet, dass** zentral auf dem Mittelteil (19) ein zylindrischer Zapfen (22) angeordnet ist, der in mindestens ein zylindrisches Loch in einer Abdeckung (80) einrastbar ist.

19. Distanzstück nach Anspruch 18, **dadurch gekennzeichnet, dass** es senkrecht zu den die konvexen Bereiche (11) aufweisenden Ebenen stumpfwinklig zueinander verlaufende schräge Flächen (23) aufweist, zwischen denen der zylindrische Zapfen (22) angeordnet ist.

20. Distanzstück nach einem der Ansprüche 18 und 19, **dadurch gekennzeichnet, dass** an jeder der durch die konvexen Bereiche (11) aufweisenden Ebenen geformten Seitenteile sich senkrecht dazu jeweils ein Achszapfen (24) anschließt, durch die die Drehachse (60) verläuft.

21. Distanzstück nach einem der Ansprüche 18 bis 20, **dadurch gekennzeichnet, dass** an dem Ende des konvexen Bereiches (11) eines Seitenteiles, welches dem ersten Absatz (14) gegenüberliegt, eine Eingriffsmulde (25) angeordnet ist.

22. Federhaken (30) zur Aufhängung eines elektrischen Gerätes auf einer Stromschiene (50), mit wenigstens einem geräteseitigen Hakenschenkel (31), der am Gerät befestigt ist, und wenigstens einem gegenüberliegenden klemmenden Hakenschenkel (32) zur Aufnahme einer Klemmkraft und wenigstens einem die beiden einander gegenüberliegenden Hakenschenkel (31), (32) verbindenden Verbindungssteg, und mit einem Distanzstück (10) zur Anpassung eines Abstandes in dem Federhaken (30) an die Dicke einer Stromschiene (50), welche zwischen die Hakenschenkel (31), (32) schiebbar ist, wobei das Distanzstück (10) um eine am Federhaken (30) angeordnete und längs der Stromschiene (50) verlaufende Drehachse (60) drehbar gelagert ist, wobei
die Drehachse (60) an dem klemmenden Hakenschenkel (32) angeordnet ist, **dadurch gekennzeichnet, dass** das Distanzstück (10) zur Anlage an der Stromschiene (50) wenigstens einen konvex gestalteten Kanten-Bereich (11) aufweist, der durch Drehung um die Drehachse (60) aus dem klemmenden Hakenschenkel (32) ausklappbar ist und dem ein am geräteseitigen Hakenschenkel (31) angeordnetes und Druckfederkraft beaufschlagtes Sammelschienenkontaktstück (91) gegenüberliegt, welches die Stromschiene (50) gegen den Kanten-Bereich (11) drückt.

23. Federhaken nach Anspruch 22, **dadurch gekennzeichnet, dass** der Federhaken (30) in zwei parallel zueinander angeordneten Ebenen jeweils ein Hakenflächenelement (35) aufweist, welches den geräteseitigen Hakenschenkel (31) und den klemmenden Hakenschenkel (32) umfasst, wobei die beiden Hakenflächenelemente (35) über mindestens ein Verbindungsteil miteinander verbunden sind.

24. Federhaken nach einem der Ansprüche 22 bis 23, d a-**durch gekennzeichnet**, dass der Federhaken (30) eine Druckfederaufnahmeeinrichtung (36) aufweist.

25. Federhaken nach einem der Ansprüche 22 bis 24, **da-durch gekennzeichnet**, dass der Federhaken (30) aus einem elektrisch leitfähigen Material besteht.

26. Federhaken nach einem der Ansprüche 22 bis 25, **dadurch gekennzeichnet, dass** der Federhaken (30) einstückig hergestellt ist.

27. Federhaken nach einem der Ansprüche 22 bis 26, **da-durch gekennzeichnet**, dass der Federhaken (30) aus mehreren einzelnen Bauteilen hergestellt ist.

28. Federhaken nach einem der Ansprüche 22 bis 27, **dadurch gekennzeichnet, dass** zumindest ein Bereich einer Anlagekante (37) des klemmenden Hakenschenkels (32) spitzwinklig zum geräteseitigen Hakenschenkel (31) verläuft.

29. Federhaken nach einem der Ansprüche 22 bis 28, **dadurch gekennzeichnet, dass** die Drehachse (60) der Einrichtung (34) zur drehbaren Befestigung des Distanzstückes (10) am klemmenden Hakenschenkel (32) eine Achse zur Aufnahme des Distanzstückes (10) ist.

30. Federhaken nach einem der Ansprüche 22 bis 28, **dadurch gekennzeichnet, dass** die Drehachse (60) der Einrichtung (34) zur drehbaren Befestigung des Distanzstückes (10) am klemmenden Hakenschenkel (32) durch eine Einrichtung (39) zur Aufnahme einer Welle (12) gebildet ist.

31. Federhaken nach einem der Ansprüche 22 bis 28, **da-durch gekennzeichnet**, dass die Drehachse (60) der Einrichtung (34) zur drehbaren Befestigung des Distanzstückes (10) am klemmenden Hakenschenkel (32) durch einen konvexen kreissegmentförmigen Bereich (38) zur Drehbewegungsführung des Distanzstückes (10) gebildet ist.

32. Federhaken nach einem der Ansprüche 22 bis 31, d a-**durch gekennzeichnet**, dass der Federhaken (30) des Weiteren eine Abdeckung (80) umfasst, die zumindest die Außenkontur des Hakenbereiches des Federhakens (30) umhüllt.

33. Federhaken nach Anspruch 32, **dadurch gekenn**- **zeichnet**, dass die Abdeckung (80) aus einem elektrisch isolierenden Material besteht.

34. Federhaken nach einem der Ansprüche 31 bis 33, d a-**durch gekennzeichnet**, dass die Abdeckung (80) derart geformt ist, dass sie ein Ablösen des Distanzstückes (10) vom konvexen kreissegmentförmigen Bereich (38) am klemmenden Hakenschenkel (32) verhindert.

35. Federhaken nach einem der Ansprüche 32 bis 34, d a-**durch gekennzeichnet**, dass die Abdeckung (80) an ihrem den klemmenden Hakenschenkel (32) abdeckenden Ende eine Aussparung (81) zur Eingriffsermöglichung aufweist.

36. Federhaken nach einem der Ansprüche 32 bis 35, **dadurch gekennzeichnet, dass** in der Abdeckung (80) zumindest eine Einrasteinrichtung (21) angeordnet ist.

37. Federhaken nach Anspruch 36, **dadurch gekenn**- **zeichnet**, dass die Einrasteinrichtung (21) in der Abdeckung (80) derart in dieser angeordnet ist, dass sie in Eingriff mit einer Einrasteinrichtung (21) bringbar ist, die sich an einer Anlagekante (15) eines im Federhaken (30) drehbar angeordneten Distanzstückes (10) befindet.

38. Federhaken nach Anspruch 36, **dadurch gekenn- zeichnet**, dass die Einrasteinrichtung (21) in der Abdeckung (80) derart in dieser angeordnet ist, dass sie in Eingriff mit einer Einrasteinrichtung (21) bringbar ist, welche in einer eine Anlagekante aufweisenden Fläche eines im Federhaken (30) drehbaren Distanzstückes (10) angeordnet ist.

39. Federhaken nach Anspruch 22, **dadurch gekenn**- **zeichnet**, dass er aus zwei parallel zueinander angeordneten flachen Hakenflächenelementen (35) besteht, und die beiden flachen Hakenflächenelemente (35) bis auf den jeweiligen Hakenöffnungsbereich von einer Abdeckung (80) umschlossen sind.

40. Federhaken nach Anspruch 39, **dadurch gekenn**- **zeichnet**, dass an der Außenseite des klemmenden Halteschenkels (32) eine Vertiefung (92) zur Einrastung in der Abdeckung (80) angeordnet ist.

41. Federhaken nach einem der Ansprüche 39 und 40, **dadurch gekennzeichnet, dass** am geräteseitigen Halteschenkel (31) ein Vorsprung (93) zur Aufnahme in einem Schlitz in der Abdeckung (80) angeordnet ist.

## Claims

1. Spacer (10) for matching a gap in a spring hook (30) to the thickness of a conductor bar (50) which can be inserted between the hook limbs (31), (32) of the spring hook (30) that are disposed opposite each other, wherein the spacer (10) is mounted so as to be capable of rotating about a axis of rotation (60) arranged on the spring hook (30) and extending along the conductor bar (50), wherein the axis of rotation (60) is arranged on a hook limb (32),
**characterised in that**
in order to bear against the conductor bar (50) the spacer (10) has at least one convexly shaped edge region (11) which can be swung out from the hook limb (32) by rotation about the axis of rotation (60) and disposed opposite which is a busbar contact piece (91) which is arranged on the other hook limb (31), to which compression spring force is applied and which presses the conductor bar (50) against the edge region (11).

2. Spacer according to claim 1, **characterised in that** the spacer (10) is embodied in such a way that upon force being applied when it is being pushed onto the conductor bar (50) it can brace itself against the spring hook (30).

3. Spacer according to one of the preceding claims, **characterised in that** it has an opening through which an axis of rotation (60) is able to pass.

4. Spacer according to one of claims 1 to 2, **characterised in that** it comprises a shaft.

5. Spacer according to one of claims 1 to 2, **characterised in that** it has a concave section (13) in the shape of a segment of a circle which, upon being brought into contact with a correspondingly circular-segment-shaped convex section (38) of a matching part, defines the trajectory of the rotary movement.

6. Spacer according to one of the preceding claims, **characterised in that** the convexly shaped section (11) on the spacer (10) is a segment of a circle.

7. Spacer according to claim 6, **characterised in that** the axis of rotation (60) of the spacer (10) is located in the centre of the segment of a circle.

8. Spacer according to one of claims 1 to 5, **characterised in that** the convexly shaped section (11) forms an eccentric disc.

9. Spacer according to one of the preceding claims, **characterised in that** a first heel (14) is fitted at one end of a bearing edge of the convex section (11) for bearing against the top side (51) of a conductor bar (50).

10. Spacer according to one of the preceding claims, **characterised in that** the spacer (10) has a plurality of convexly shaped bearing edges which essentially form a convex overall bearing edge (15) and **in that** cutouts (16) in which latching elements can be snapped into place are arranged between the convexly shaped bearing edges.

11. Spacer according to claims 9 and 10, **characterised in that** a second heel (17) for limiting rotary movement is arranged at the end of the convex overall bearing edge (15) that is disposed opposite the end at which the first heel (14) is arranged.

12. Spacer according to one of the preceding claims, **characterised in that** it is embodied essentially as a compact disc.

13. Spacer according to one of claims 3 and 4 and according to claim 12, **characterised in that** it has reinforcing ribs (18).

14. Spacer according to one of claims 1 to 11, **characterised in that** in two planes arranged parallel to each other it has two convex sections (11) which are connected to each other by way of a middle part (19).

15. Spacer according to claim 14, **characterised in that** the middle part (19) is arranged essentially at one end in each case of the overall bearing edge (15) of the convexly shaped section (11) and adjoining said middle part is a tongue (20) which extends between the planes in which the convexly shaped sections (11) are located substantially to the opposite end of the overall convexly shaped bearing edge (15).

16. Spacer according to one of the preceding claims, **characterised in that** at least one engagement means (21) is arranged in the surface having the convex section (11).

17. Spacer according to one of the preceding claims, **characterised in that** at least one heel for limiting rotary movement is arranged on the surface forming the convex section (11).

18. Spacer according to claim 14, **characterised in that** a cylindrical peg (22) which can snap into place in at least one cylindrical hole in a cover (80) is arranged centrally on the middle part (19).

19. Spacer according to claim 18, **characterised in that** perpendicularly to the planes having the convex sections (11) it has inclined surfaces (23) which extend at an obtuse angle to one another and between which the cylindrical peg (22) is arranged.

20. Spacer according to one of claims 18 and 19, **characterised in that** adjoining each of the side parts formed by the planes having convex sections (11) there is in each case, perpendicularly thereto, an axle journal (24) through which the axis of rotation (60) extends.

21. Spacer according to one of claims 18 to 20, **characterised in that** an access recess (25) is arranged at the end of the convex section (11) of a side part that is disposed opposite the first heel (14).

22. Spring hook (30) for mounting an electrical device on a conductor bar (50), comprising at least one device-side hook limb (31) which is fixed to the device and at least one oppositely disposed clamping hook limb (32) for receiving a clamping force and at least one connecting web connecting the two oppositely disposed hook limbs (31), (32), and having a spacer (10) for matching a gap in the spring hook (30) to the thickness of a conductor bar (50) which can be inserted between the hook limbs (31), (32), wherein the spacer (10) is mounted so as to be capable of rotating about an axis of rotation (60) arranged on the spring hook (30) and extending along the conductor bar (50), wherein the axis of rotation (60) is arranged on the clamping hook limb (32),
**characterised in that**
in order to bear against the conductor bar (50) the spacer (10) has at least one convexly shaped edge region (11) which can be swung out from the clamping hook limb (32) by rotation about the axis of rotation (60) and disposed opposite which is a busbar contact piece (91) which is arranged on the device-side hook limb (31), to which compression spring force is applied and which presses the conductor bar (50) against the edge region (11).

23. Spring hook according to claim 22, **characterised in that** in each of two planes arranged parallel to each other the spring hook (30) has a hook surface element (35) comprising the device-side hook limb (31) and the clamping hook limb (32), with the two hook surface elements (35) being connected to each other by way of at least one connecting part.

24. Spring hook according to one of claims 22 to 23, **characterised in that** the spring hook (30) has a compression spring receiving device (36).

25. Spring hook according to one of claims 22 to 24, **characterised in that** the spring hook (30) is made of an electrically conductive material.

26. Spring hook according to one of claims 22 to 25, **characterised in that** the spring hook (30) is fabricated as a single piece.

27. Spring hook according to one of claims 22 to 26, **characterised in that** the spring hook (30) is produced from a plurality of individual components.

28. Spring hook according to one of claims 22 to 27, **characterised in that** at least one section of a bearing edge (37) of the clamping hook limb (32) extends at an acute angle to the device-side hook limb (31).

29. Spring hook according to one of claims 22 to 28, **characterised in that** the axis of rotation (60) of the device (34) for rotatably securing the spacer (10) to the clamping hook limb (32) is an axle for receiving the spacer (10).

30. Spring hook according to one of claims 22 to 28, **characterised in that** the axis of rotation (60) of the device (34) for rotatably securing the spacer (10) to the clamping hook limb (32) is formed by means of a device (39) for receiving a shaft (12).

31. Spring hook according to one of claims 22 to 28, **characterised in that** the axis of rotation (60) of the device (34) for rotatably securing the spacer (10) to the clamping hook limb (32) is formed by means of a convex circular-segment-shaped section (38) for guiding the rotary movement of the spacer (10).

32. Spring hook according to one of claims 22 to 31, **characterised in that** the spring hook (30) additionally comprises a cover (80) which encloses at least the outer contours of the hook section of the spring hook (30) .

33. Spring hook according to claim 32, **characterised in that** the cover (80) is made of an electrically insulating material.

34. Spring hook according to one of claims 31 to 33, **characterised in that** the cover (80) is shaped in such a way that it prevents the spacer (10) from becoming detached from the convex circular-segment-shaped section (38) on the clamping hook limb (32).

35. Spring hook according to one of claims 32 to 34, **characterised in that** the cover (80) has a cutout (81) at its end covering the clamping hook limb (32) for the purpose of allowing access.

36. Spring hook according to one of claims 32 to 35, **characterised in that** at least one engagement means (21) is arranged in the cover (80).

37. Spring hook according to claim 36, **characterised in that** the engagement means (21) in the cover (80) is arranged in the latter in such a way that it can be brought into engagement with an engagement means (21) which is located on a bearing edge (15) of a spacer (10) that is rotatably arranged in the spring hook (30).

38. Spring hook according to claim 36, **characterised in that** the engagement means (21) in the cover (80) is arranged in the latter in such a way that it can be brought into engagement with an engagement means (21) which is arranged in a surface having a bearing edge of a spacer (10) rotatably arranged in the spring hook (30).

39. Spring hook according to claim 22, **characterised in that** it consists of two flat hook surface elements (35) arranged parallel to each other and **in that** except for the respective hook opening section the two flat hook surface elements (35) are enclosed by a cover (80).

40. Spring hook according to claim 39, **characterised in that** an indentation (92) for snapping into place in the cover (80) is arranged on the outside of the clamping retaining limb (32).

41. Spring hook according to one of claims 39 and 40, **characterised in that** a projection (93) for being received in a slot in the cover (80) is arranged on the device-side retaining limb (31).

## Revendications

1. Pièce ( 10 ) intercalaire pour adapter l'écartement dans un mousqueton ( 30 ) à l'épaisseur d'un rail ( 50 ) de contact, qui peut glisser entre les branches ( 31, 22 ) opposées l'une à l'autre du mousqueton ( 30 ), la pièce ( 10 ) intercalaire étant montée tournante autour d'un axe ( 60 ) de rotation disposé sur le mousqueton ( 30 ) et s'étendant le long du rail ( 50 ) de contact, dans laquelle l'axe ( 60 ) de rotation est disposé sur une branche ( 32 ) du mousqueton,
**caractérisée en ce que**
la pièce ( 10 ) intercalaire a, pour s'appliquer au rail ( 50 ) de contact, au moins une zone ( 11 ) de bord convexe, qui, par rotation autour de l'axe ( 60 ) de rotation, peut s'écarter de la branche ( 32 ) du mousqueton et qui fait face à la pièce ( 91 ) de contact du rail de contact, qui est disposée sur l'autre branche ( 31 ) du mousqueton, qui est soumise à la force d'un ressort de compression et qui repousse le rail ( 50 ) de contact sur la zone ( 11 ) de bord.

2. Pièce intercalaire suivant la revendication 1, **caractérisée en ce que** la pièce ( 10 ) intercalaire est conformée de manière à pouvoir s'appuyer sur le mousqueton ( 30 ), lorsqu'elle est soumise à une force, lorsqu'elle est poussée sur le rail ( 50 ) de contact.

3. Pièce intermédiaire suivant l'une des revendications précédentes, **caractérisée en ce qu'**elle a une ouverture de passage à l'axe ( 60 ) de rotation.

4. Pièce intermédiaire suivant l'une des revendications 1 à 2, **caractérisée en ce qu'**elle comprend un arbre.

5. Pièce intermédiaire suivant l'une des revendications 1 à 2, **caractérisée en ce qu'**elle a une zone ( 13 ) concave en forme de segment de cercle, qui, lors de l'application sur une zone ( 38 ) convexe conformée en segment de cercle correspondant d'une pièce antagoniste définit la trajectoire de déplacement en rotation.

6. Pièce intermédiaire suivant l'une des revendications précédentes, **caractérisée en ce que** la zone ( 11 ) convexe de la pièce ( 10 ) intercalaire est un segment de cercle.

7. Pièce intercalaire suivant la revendication 6, **caractérisée en ce que** l'axe ( 60 ) de rotation de la pièce ( 10 ) intercalaire se trouve au centre du segment de cercle.

8. Pièce intermédiaire suivant l'une des revendications 1 à 5, **caractérisée en ce que** la zone ( 11 ) convexe forme un disque d'excentrique.

9. Pièce intermédiaire suivant l'une des revendications précédentes, **caractérisée en ce que**, à une extrémité d'un bord d'application de la zone ( 11 ) convexe, est ménagé un premier ressaut ( 40 ) d'application au côté ( 51 ) supérieur d'un rail ( 50 ) de contact.

10. Pièce intermédiaire suivant l'une des revendications précédentes, **caractérisée en ce que** la pièce ( 10 ) intercalaire a une pluralité de bords d'application convexes, qui forment sensiblement un bord ( 15 ) d'application globale convexe et qui sont disposés entre les évidements ( 16 ) de bords d'application convexes, dans lesquels peuvent être encliquetés des éléments d'encliquetage.

11. Pièce intercalaire suivant les revendications 9 et 10, **caractérisée en ce que**, à l'extrémité du bord ( 15 ) d'application globale convexe, qui fait face à l'extrémité où est disposé le premier ressaut ( 14 ), est disposé un deuxième ressaut ( 17 ) de limitation du mouvement en rotation.

12. Pièce intermédiaire suivant l'une des revendications précédentes, **caractérisée en ce qu'**elle est constituée essentiellement sous la forme d'un disque compact.

13. Pièce intermédiaire suivant l'une des revendications 3 et 4 et suivant la revendication 12, **caractérisée en ce qu'**elle a des nervures ( 18 ) de renforcement.

14. Pièce intermédiaire suivant l'une des revendications 1 à 11, **caractérisée en ce qu'**elle a, dans deux plans parallèles entre eux, deux zones ( 11 ) convexes, qui sont reliées entre elles par une partie ( 19 ) médiane.

15. Pièce intercalaire suivant la revendication 14, **caractérisée en ce que** la partie ( 19 ) médiane est disposée sensiblement sur respectivement l'une des extrémités de tout le bord ( 15 ) d'application de la zone ( 11 ) convexe et il s'y raccorde une patte ( 20 ), qui s'étend entre les plans dans lesquels se trouvent les zones ( 11 ) convexes sensiblement vers l'extrémité opposée de tout le bord ( 15 ) d'application convexe.

16. Pièce intermédiaire suivant l'une des revendications précédentes, **caractérisée en ce qu'**au moins un dispositif ( 21 ) d'encliquetage est disposé dans la surface ayant la zone ( 11 ) convexe.

17. Pièce intermédiaire suivant l'une des revendications précédentes, **caractérisée en ce qu'**au moins un ressaut de limitation du mouvement de rotation est disposé sur la surface formant la zone ( 11 ) convexe.

18. Pièce intercalaire suivant la revendication 14, **caractérisée en ce que**, au centre de la partie ( 19 ) médiane, est disposé un tenon ( 22 ) cylindrique, qui peut s'encliqueter dans au moins un trou cylindrique d'un couvercle ( 80 ).

19. Pièce intercalaire suivant la revendication 18, **caractérisée en ce qu'**elle a, perpendiculairement au plan ayant les zones ( 11 ) convexes, des surfaces ( 23 ) inclinées, qui s'étendent à angle obtus entre elles et entre lesquelles est disposé le tenon ( 22 ) cylindrique.

20. Pièce intermédiaire suivant l'une des revendications 18 et 19, **caractérisée en ce que**, à chacune des parties latérales formées par les plans ayant les zones ( 11 ) convexes, se raccorde, perpendiculairement à elles, respectivement un tourillon ( 24 ), dans lequel s'étend l'axe ( 60 ) de rotation.

21. Pièce intermédiaire suivant l'une des revendications 18 et 20, **caractérisée en ce qu'**une cavité ( 25 ) de préhension est ménagée à l'extrémité de la zone ( 11 ) convexe d'une partie latérale qui fait face au premier ressaut ( 14 ).

22. Mousqueton ( 30 ) pour la suspension d'un appareil électrique à un rail ( 50 ) de contact, comprenant au moins une branche ( 31 ) de mousqueton du côté de l'appareil, qui est fixée à l'appareil, et au moins une branche ( 32 ) de mousqueton de serrage en opposition, pour l'absorption d'une force de serrage, et au moins une âme de liaison reliant les deux branches ( 31, 32 ) opposées l'une à l'autre du mousqueton et comprenant une pièce ( 10 ) intercalaire pour adapter l'écartement dans le mousqueton ( 30 ) à l'épaisseur d'un rail ( 50 ) de contact, qui peut glisser entre les branches ( 31, 32 ) du mousqueton, la pièce ( 10 ) intercalaire étant montée tournante autour d'un axe ( 60 ) de rotation disposé sur le mousqueton ( 30 ) et s'étendant le long du rail ( 50 ) de contact, dans lequel l'axe ( 60 ) de rotation est disposé sur la branche ( 32 ) de serrage du mousqueton,
**caractérisé en ce que**
la pièce ( 10 ) intercalaire a, pour s'appliquer au rail ( 50 ) de contact, au moins une zone ( 11 ) de bord convexe, qui, par rotation autour de l'axe ( 60 ) de rotation, peut s'écarter de la branche ( 32 ) du mousqueton et qui fait face à la pièce ( 91 ) de contact du rail de contact, qui est disposée sur l'autre branche ( 31 ) du mousqueton, qui est soumise à la force d'un ressort de compression et qui repousse le rail ( 50 ) de contact sur la zone ( 11 ) de bord.

23. Mousqueton suivant la revendication 22, **caractérisé en ce que** le mousqueton ( 30 ) a, dans deux plans parallèles entre eux, respectivement un élément ( 35 ) de surface de mousqueton, qui comprend la branche ( 31 ) du mousqueton du côté de l'appareil et la branche ( 32 ) de serrage du mousqueton, les deux éléments ( 35 ) de surface du mousqueton étant reliés entre eux par au moins une partie de liaison.

24. Mousqueton suivant l'une des revendications 22 à 23, **caractérisé en ce que** le mousqueton ( 30 ) a un dispositif ( 36 ) de réception d'un ressort de compression.

25. Mousqueton suivant l'une des revendications 22 à 24, **caractérisé en ce que** le mousqueton ( 30 ) est en un matériau conducteur de l'électricité.

26. Mousqueton suivant l'une des revendications 22 à 25, **caractérisé en ce que** le mousqueton ( 30 ) est fabriqué d'une seule pièce.

27. Mousqueton suivant l'une des revendications 22 à 26, **caractérisé en ce que** le mousqueton ( 30 ) est fabriqué en plusieurs éléments constitutifs individuels.

28. Mousqueton suivant l'une des revendications 22 à 27, **caractérisé en ce qu'**au moins une zone d'un bord ( 37 ) d'application de la branche ( 32 ) de serrage du mousqueton s'étend en faisant un angle obtus avec la branche ( 31 ) de mousqueton du côté de l'appareil.

29. Mousqueton suivant l'une des revendications 22 à 28, **caractérisé en ce que** l'axe ( 60 ) de rotation du dispositif ( 34 ) est, pour la fixation avec possibilité de tourner de la pièce ( 10 ) intercalaire à la branche ( 32 ) de serrage du mousqueton, un axe de réception de la pièce ( 10 ) intercalaire.

30. Mousqueton suivant l'une des revendications 22 à 28, **caractérisé en ce que** l'axe ( 60 ) de rotation du dispositif ( 34 ) est, pour la fixation avec possibilité de tourner de la pièce ( 10 ) intercalaire à la branche ( 32 ) de serrage du mousqueton par un dispositif ( 39 ), formé pour la réception d'un arbre ( 10 ).

31. Mousqueton suivant l'une des revendications 22 à 28, **caractérisé en ce que** l'axe ( 60 ) de rotation du dispositif ( 34 ) est, pour la fixation avec possibilité de tourner de la pièce ( 10 ) intercalaire à la branche ( 32 ) de serrage du mousqueton par une zone ( 38 ) convexe en forme de segment de cercle, formé pour le guidage du mouvement de rotation de la pièce ( 10 ) intercalaire.

32. Mousqueton suivant l'une des revendications 22 à 31, **caractérisé en ce que** le mousqueton ( 30 ) comprend, en outre, un couvercle ( 80 ), qui enveloppe au moins le contour extérieur de la zone de crochet du mousqueton ( 30 ).

33. Mousqueton suivant la revendication 32, **caractérisé en ce que** le couvercle ( 80 ) est en un matériau isolant du point de vue électrique.

34. Mousqueton suivant l'une des revendications 31 à 33, **caractérisé en ce que** le couvercle ( 80 ) est formé de manière à empêcher la pièce ( 10 ) intercalaire de se détacher de la zone ( 38 ) convexe en forme de segment de cercle de la branche ( 32 ) de serrage du mousqueton.

35. Mousqueton suivant l'une des revendications 32 à 34, **caractérisé en ce que** le couvercle ( 80 ) a, sur son extrémité recouvrant la branche ( 32 ) de serrage du mousqueton, un évidement ( 81 ) permettant une préhension.

36. Mousqueton suivant l'une des revendications 32 à 35, **caractérisé en ce qu'**au moins un dispositif ( 21 ) d'encliquetage est disposé dans le couvercle ( 80 ).

37. Mousqueton suivant la revendication 36, **caractérisé en ce que** le dispositif ( 21 ) d'encliquetage dans le couvercle ( 80 ) y est disposé de manière à pouvoir être mis en prise avec un dispositif ( 21 ) d'encliquetage, qui se trouve sur un bord ( 15 ) d'application d'une pièce ( 10 ) intercalaire montée tournante dans le mousqueton ( 30 ).

38. Mousqueton suivant la revendication 36, **caractérisé en ce que** le dispositif ( 21 ) d'encliquetage dans le couvercle ( 80 ) y est disposé de manière à pouvoir être mis en prise avec un dispositif ( 21 ) d'encliquetage, qui est disposé dans une surface, ayant un bord d'application, d'une pièce ( 10 ) intercalaire pouvant tourner dans le mousqueton ( 30 ).

39. Mousqueton suivant la revendication 22, **caractérisé en ce qu'**il est constitué de deux éléments ( 35 ) de surface de mousqueton plats, disposés parallèlement l'un à l'autre et les deux éléments ( 35 ) de surface de mousqueton plats sont enfermés par le couvercle ( 80 ), à l'exception de la zone respective d'ouverture du mousqueton.

40. Mousqueton suivant la revendication 39, **caractérisé en ce que**, du côté extérieur de la branche ( 32 ) de serrage du mousqueton, est disposée une cavité ( 92 ) pour l'encliquetage dans le couvercle ( 80 ).

41. Mousqueton suivant l'une des revendications 39 et 40, **caractérisé en ce que**, sur la branche ( 31 ) du mousqueton du côté de l'appareil, est disposée une saillie ( 93 ) destinée à être reçue dans une fente du couvercle ( 80 ).
